# EUROPEAN PATENT APPLICATION

(11) **EP 1 722 046 A2**
(43) Date of publication of application: **15.11.2006**
(21) Application number: 06013371.7
(22) Date of filing: 23.03.2000
(51) Int. Cl.: E04H 14/00, E04B 1/348, A47G 29/28, E06B 7/086, E06B 7/084, E06B 9/323, E04F 11/18, H02J 3/00

(54) **Interactive building module**

(30) Priority: 23.03.1999 AU PP940899
(62) Divisional of application: 00910428.2
(71) Applicant: Time Developments Pty. Ltd., South Yarra, Victoria 3141 (AU)
(72) Inventor: The designation of the inventor has not yet been filed
(74) Representative: Vossius & Partner

(57) **Abstract**

A modular building structure which can be converted between a variety of usage modes, such as an office, hotel or residential purposes. Each module includes fittings that allow for attachment and detachment of internal components to enable conversion between the usage modes. The modules may be joined in different ways, such as in a checkerboard configuration. Also disclosed are an exchange module to permit the secure exchange of items to or from the building structure to which access is permitted if authorisation information matches an access instruction, and a resource management system to control the use of resources such as electricity and water in which a resource source is chosen that meets rather than exceeds the requirements of the resource demand.

## Description

### Field of the invention

This invention relates to interactive building modules and refers particularly, though not exclusively, to interactive building modules capable of flexible multipurpose use and arrangement in various market sectors.

### Definitions

Throughout this specification reference to a hotel is to be taken as including a reference to a motel and/or serviced apartment. Furthermore, a reference to an office is to be taken as including a reference to a serviced office.

### Background of the invention

Technological development and subsequent global economic and social change have made employment an important issue. Urban village models aim to foster local employment, training and shopping opportunities for those working in the new service economy, and minimises their travel costs and time. Urban villages encourage small and home-based business solutions. In addition, higher concentrations of residents will help support more of these businesses, which in turn can provide many of the facilities and further infrastructure that additional small businesses need to operate.

It is becoming evident that the strength of an economy relies not on physical trade but on the movement of ideas and skills. One can thus contemplate the creation of communities, which are more internally focused and truly 'sustainable' in that they bring cause and effect closer together and are more responsive to their members. Further potential lies in establishing business frameworks which are supportive of people in local places and which reflect the nature of these places. This potential may be best realised by grouping ownership of such businesses and by extending the concept of "ownership" as widely as possible through organised business systems.

Increasingly we see cities in an international context. The growth of networking within and between cities and regions is one of the key developments since the advent of the Internet. Emerging alliances and coalitions fostered by the Internet provide a variety of functions: trade, idea exchange, best practice experience, resourcing and promoting local economic and geographic regional development. Whilst this networking has been forming naturally, the associated business models are still at a stage of infancy.

A society which is connected to global information and culture, and which fosters the ideas and skills of its people is a society which will succeed in improving the wellbeing of its people. Further, a society accommodated in well designed more functional buildings, is a more intelligent vision of the future.

### Summary of the invention

The inventive concept, in its various aspects, is inspired by the fundamental realisation that use of existing building structures is associated with high capital costs and low utilisation rates.

Accordingly, the invention, in various aspects, preferably proposes multiple building structures built of modular components, in which the resulting building structures are fabricated for construction involving reduced capital costs, and multi-purpose usage.

In a further aspect, the volume efficiency of the modular building components can be enhanced by desirably locating those components in favourable configurations. In other aspects, the external water and energy demands of the building structure are preferably minimised by the use of water and energy resources appropriate to specific usage demands.

In a related aspect, resources usage by the building structure is interactively managed in response to demands for resources services and local resource cost and availability.

In a further aspect, investment in a number of the building structures is advantageously facilitated by a communal pooling of income associated with the building structures, coupled with the option to sacrifice access to that pool of income in exchange for occupancy of a building structure.

In order to suit the present and future varying requirements, new real estate concepts advantageously conserve and enhance a community's resources so that the ecological process, on which life depends, is maintained and the total quality of life, now and in the future, will improve. The inventive concept is based upon a contemporary planning view: that a healthy city should consist of numerous nodes: high energy, dense, and interactive urban villages. The historical approach of separating employment areas from residential is no longer necessary or efficient. The inventive concept further develops the sophistication of existing business models, and enables consumers new levels of service and higher margins for manufacturers and service providers.

The conventional model of the time-share condominium involves mobility of capital paired with mobility of ownership. The inventive concept introduces the notion of mobility of space. Like the mobility of "particles" assembled into space with meaningful variable form, the inventive concept contemplates an increase in productive flow and allows variable use permutations over both virtual and physical existence within a building space. The conventional time-share model is challenged and enhanced by the use of universal spaces capable of variable configurations, creating splicings and mutations over the physical form, leading to a better and more fluid' setting for social and economic life.

### Usage mode conversion

In this aspect, the inventive concept resides in a recognition that a building is desirably configured between multiple different usage modes over a given period by preferably using standardised fittings which can be used to securely engage and disengage a variety of different components.

### Checkerboard configuration

In this aspect, the inventive concept resides in a recognition that the volume effciency of modular building components can be enhanced significantly by providing modules that can be inter-linked in a "checkerboard" configuration to increase the effective volume of resulting modular building structure.

### Exchange module

In this aspect, the inventive concept resides in a recognition that secure exchange of items with a building structure is advantageouly facilitated by a restricted access exchange module to which access can be permitted if appropriate authorisation information is presented matching an authorised access instruction.

### Louvre assembly

In this aspect, the inventive concept resides in a recognition that the energy usage and space efficiency of a building structure can be improved by providing a facade having a louvre assembly with a series of articulated louvres able to be retracted to avoid obstruction of a facade. Providing an integrated handrail can avoid the need for a balcony, and can provide greater natural ambient lighting within the structure, minimising artificial lighting requirements.

### Preference configurable

In this aspect, the inventive concept resides in a recognition that a building structure can be adapted between a variety of configurations to meet an occupant's or a group of occupants' needs. A building structure can meet those occupants' needs in different ways at different times. Accordingly, it is recognized that it is advantageous to generate preference profiles describing desired configuration options of a building structure, and configuring the building structure between various of those preference profiles as required. It is recognised that this is particularly desirable when different occupants regularly occupy a particular building structure over a period of time, or particular occupants occupy different building structures over a period of time.

### Energy management

In this aspect, the inventive concept resides in a recognition that the impact of the energy demands of a building structure can be reduced, and in particular, the dependence on an external source of electrical energy can be reduced by meeting, where possible, energy demands with energy from a source able to generally meet rather than exceed the respective demand. In this way, demand for "expensive" or "high-impact" energy, such as externally sourced electrical energy can be reduced by sacrificing use of such energy for use of "cheaper" or "low-impact" energy where possible. As a consequence, for example, energy generated within the module is generally used in preference to energy sourced externally from the module.

### Water management

In this aspect, the inventive concept resides in a recognition that the impact of water consumption in a building structure can be reduced, and in particular, the dependence on an external source of water can be reduced by meeting, where possible, water demands with water from a source generally able to meet rather than exceed the quality requirements for the respective water usage. In this way, demand for "expensive" or "high-impact" water, such as externally sourced water can be reduced by sacrificing use of such water for use of "cheaper" or "low-impact" water where possible. As a consequence, for example, water processed by treatment within the module is generally used in preference to water sourced externally from the module.

### Resource management system

In this aspect, the inventive concept resides in a recognition that the resources available to a building module are interactively and intelligently managed using a networked management system.

### Investment

In this aspect, the inventive concept resides in a recognition that investment in building structures or property is advantageously facilitated by a mechanism whereby an investor can have access to income derived from multiple buildings, or exercise, in lieu of access to that income, a right of tenancy in one or more of the multiple buildings. Of course, the right of tenancy is naturally subject to conditions relating to the logistical operation of the occupancy of the multiple buildings, and equitably meeting the rights of all investors.

Preferably, interactive modules for a building are capable of use as an office, hotel or for residential purposes. Preferably, there is an inter-connected network of buildings, investors, occupiers and business operators. The buildings are preferably located adjacent to areas of high commercial and retail activity and are designed to tap into the existing infrastructure of these centres. A network of inter-connected businesses can therefore be established through the ground level retail areas and some of their upper level modules.

Preferably, the physical design of the module allows for residential, office, and hotel uses from the same space at any point in time. Transference from one use mode to another may merely require changing and/or moving furniture, and possible reprogramming of certain services such as, for example, telecommunication services. By integrating a retractable glass wall system and integrated façade system the module may enable further adaption from indoor to outdoor uses.

Preferably, the design streamlines the daily activities of its occupants, and may also provide them with the ability to live, work and have relaxation in the same geographical area, the same building, or even within the same module. The module may be one standard space and efficient to construct as many of its components may be pre-fabricated. The module may be produced in various design formats suitable for different market sectors. As an example, it is possible to produce three general designs, two fixed infrastructure designs, and a mobile containerised version.

Preferably, the modules themselves are durable, and fitted-out with contemporary high performance materials, utilising industrially designed exchangeable components and fittings. By changing the configuration of the fit-out components, the universal spaces created may reach greater levels of utilisation.

Preferably, integrated computerisation may enable automation and creation of virtual environments with real-time audiovisual communications, financial exchange and personalisation via dynamic IP addressing. For use of the computer functions, an optional hand-held monitor may be available and may further link the occupant with their own module and building group's information, building control and service systems.

Preferably, the integrated systems architecture of the modules may enable responsive and interactive energy management systems, maximising use of onsite renewable energies together with automated recycling systems. These integrated design techniques incorporating high performance building materials may minimise the impact of greenhouse emissions caused through manufacture, the life-cycle running cost and the reliance on existing service infrastructures, providing short and long term ecological and economic benefits.

Preferably, the module, like an appliance (connected via the Internet), may enable the occupants more interactive form and function. The systems architecture may enable automated personal profiling of individual requirements, preferences and/or settings. Integrated systems architecture may enable remote monitoring for mental well-being through individual interactions, healthcare and remote diagnostics of all equipment.

Preferably, automated management systems incorporating reservation procedures, remote vending and yield management via the Internet may enable greater accessibility encouraging the associated benefits of higher occupancy rates, tourism, cultural and information exchange.

### Description of drawings

Fig. 1 is a perspective view of a smaller interactive module for a building according to the present invention;
Fig. 2 is a perspective of larger interactive module;
Fig. 3 is an exterior perspective view of a building according to one embodiment;
Fig. 4 is an exemplary floor plan of the building of Fig. 3;

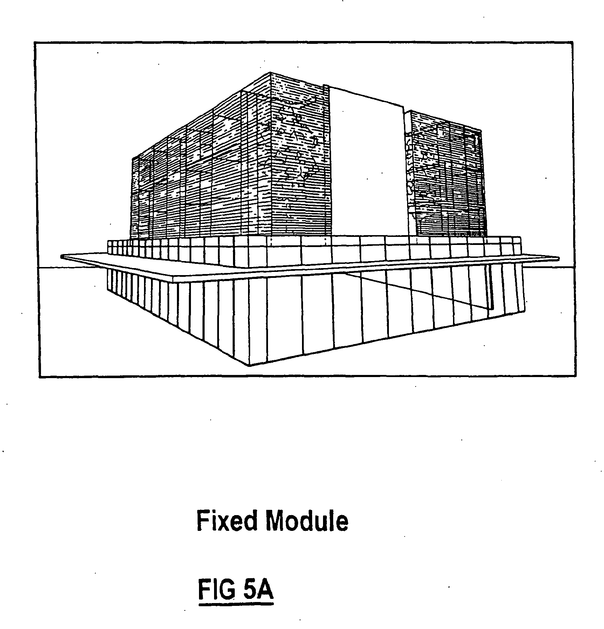

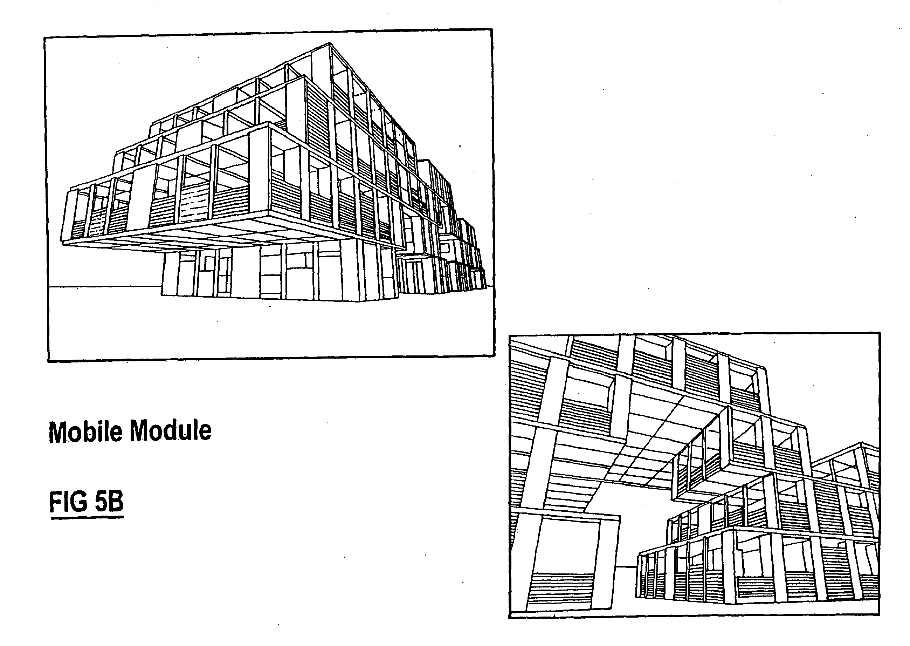

Figs. 5A and 5B are perspective views of an interactive mobile module for a building of fixed and mobile construction respectively.

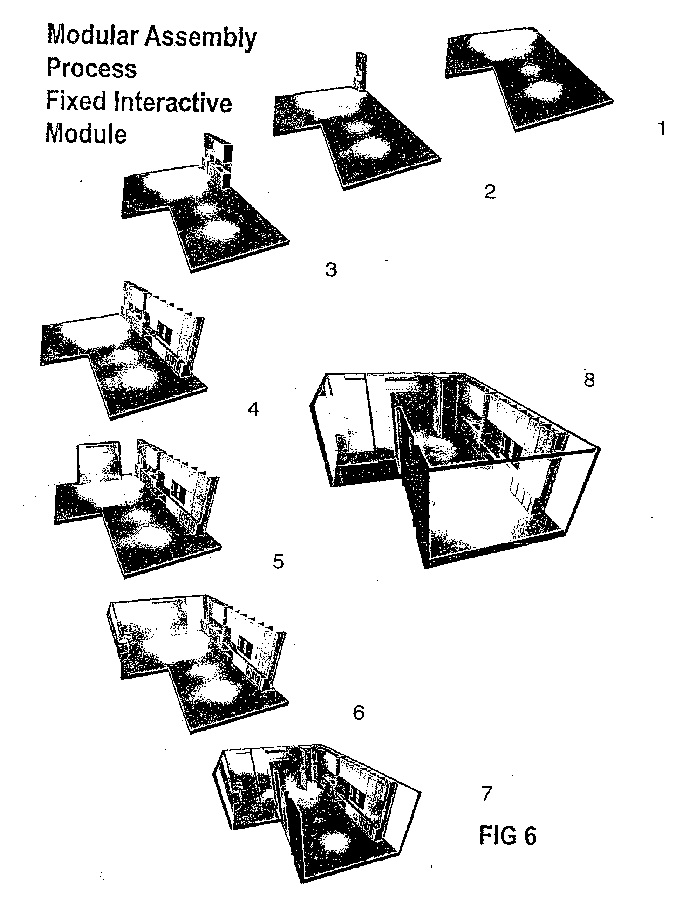

Fig. 6 is a series of drawings of the modular construction of a section of a building structure.
Figs. 7A and 7B, and Figs. 8A and 8B are both respective views of an interior space of a building.structure in a residential mode or office mode.
Figs. 9 and 10 are floor plans of the interior space in the residential mode and office mode respectively.

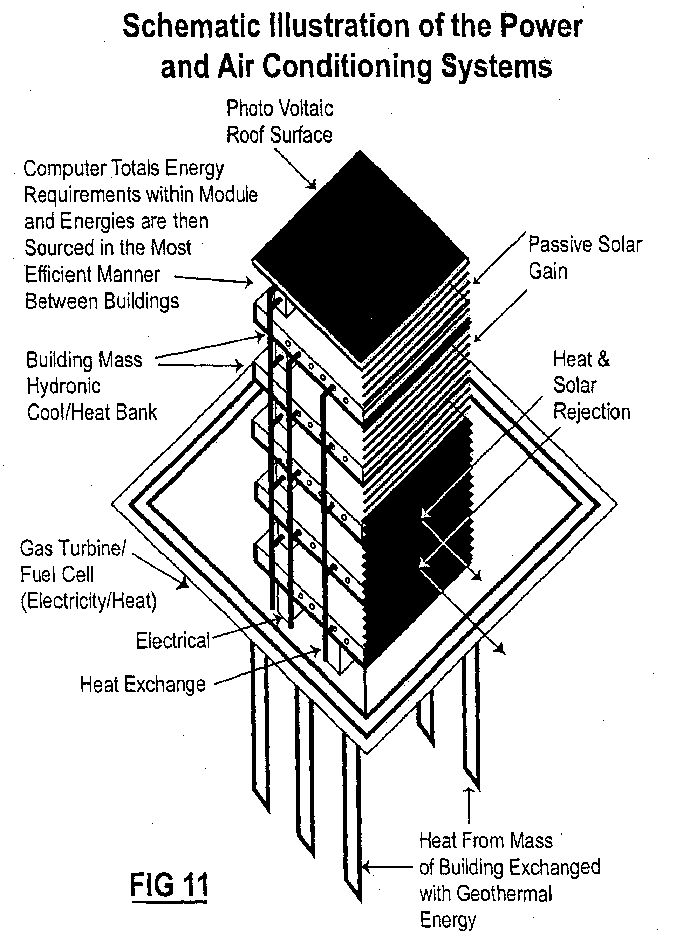

Fig. 11 is a schematic illustration of the power and air conditioning systems.

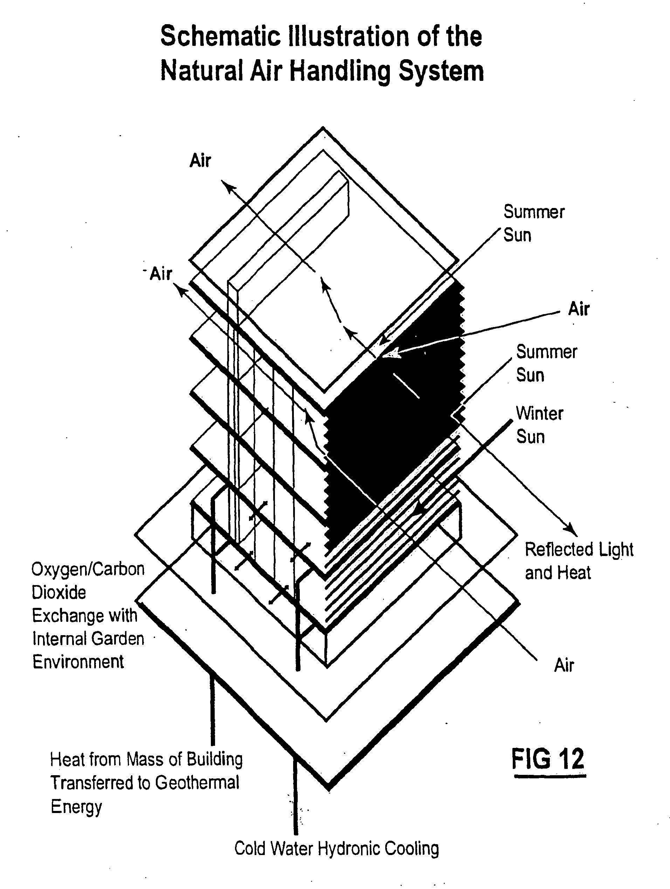

Fig. 12 is a schematic illustration of the natural air handling system.

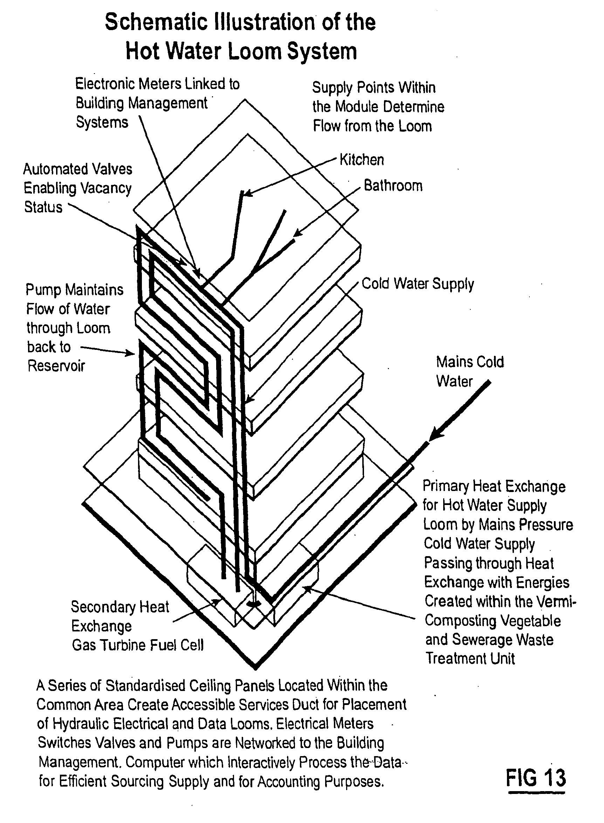

Fig. 13. is a schematic illustration of the hot water loom system.

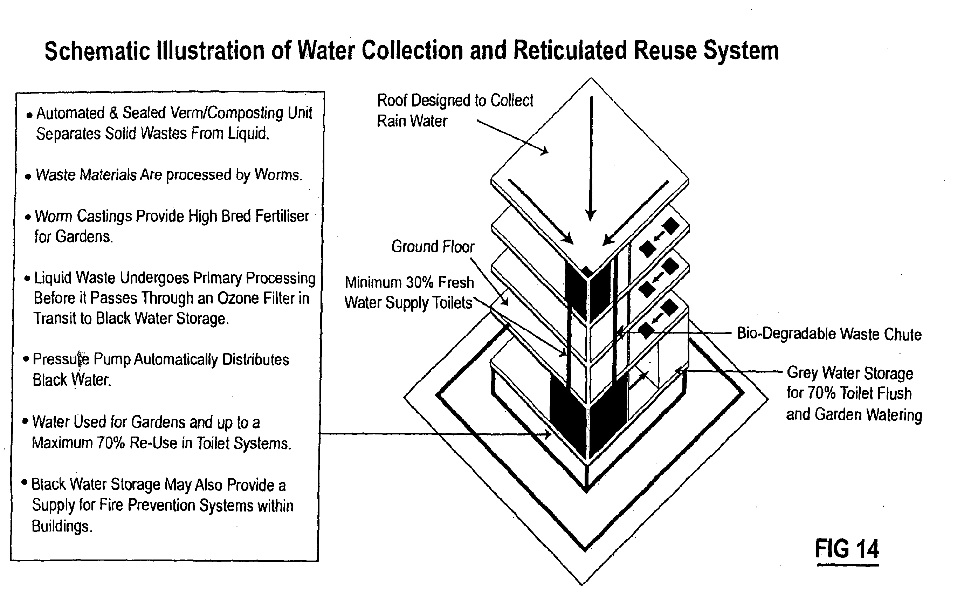

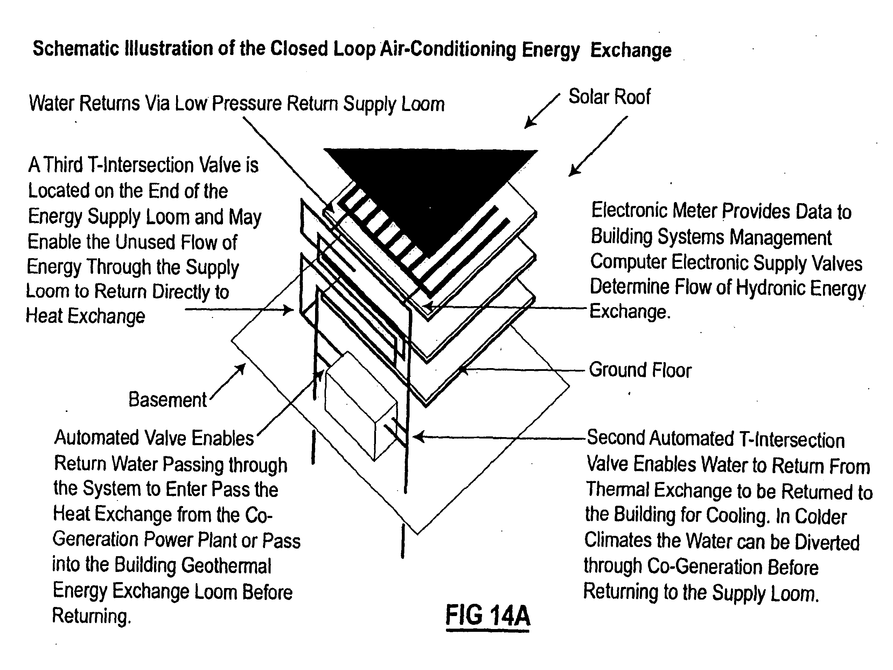

Fig. 14 is a schematic illustration of water collection and reticulated reuse system.
Fig. 14A is a schematic illustration of a closed-loop air-conditioned energy exchange system.

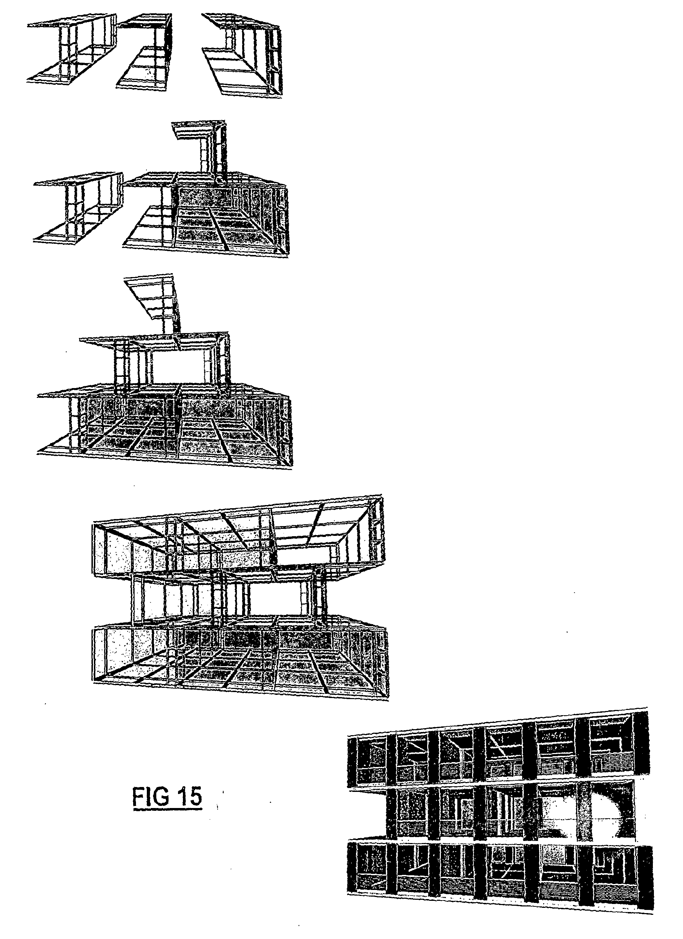

Fig. 15 depicts sequential illustrations of the manufactured assembly process of a smaller interactive fixed module for a building.

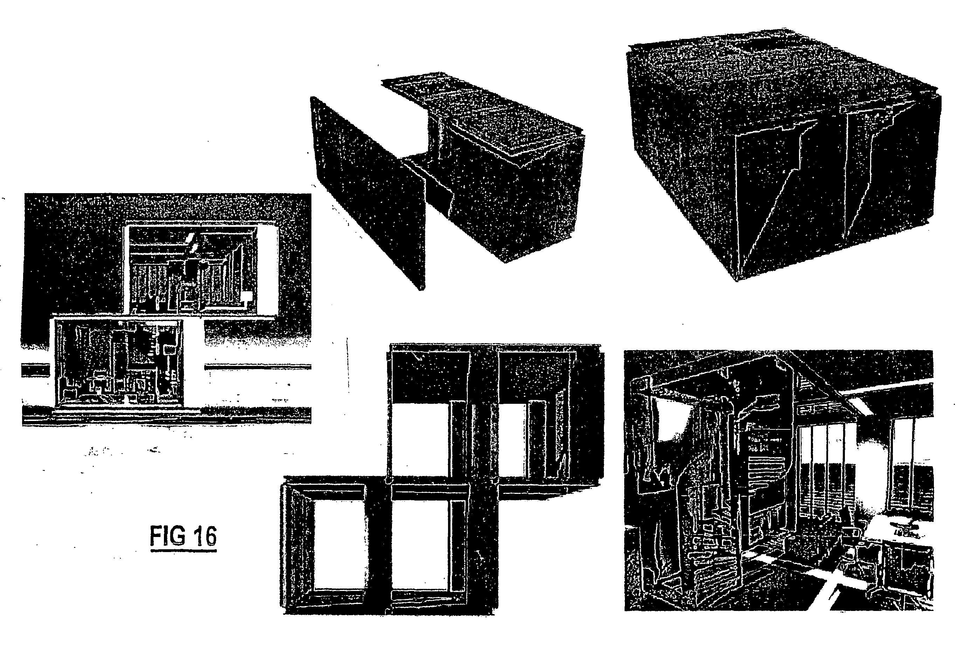

Fig. 16 depicts sequential illustrations of the manufactured assembly process of an interactive mobile module for a building.

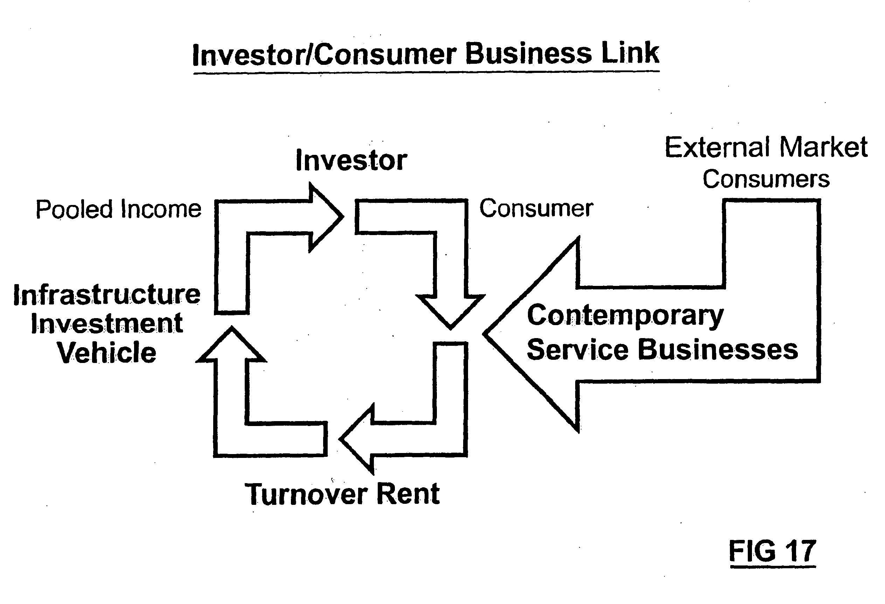

Fig. 17 is a diagram of the Investor/Consumer Business Link.

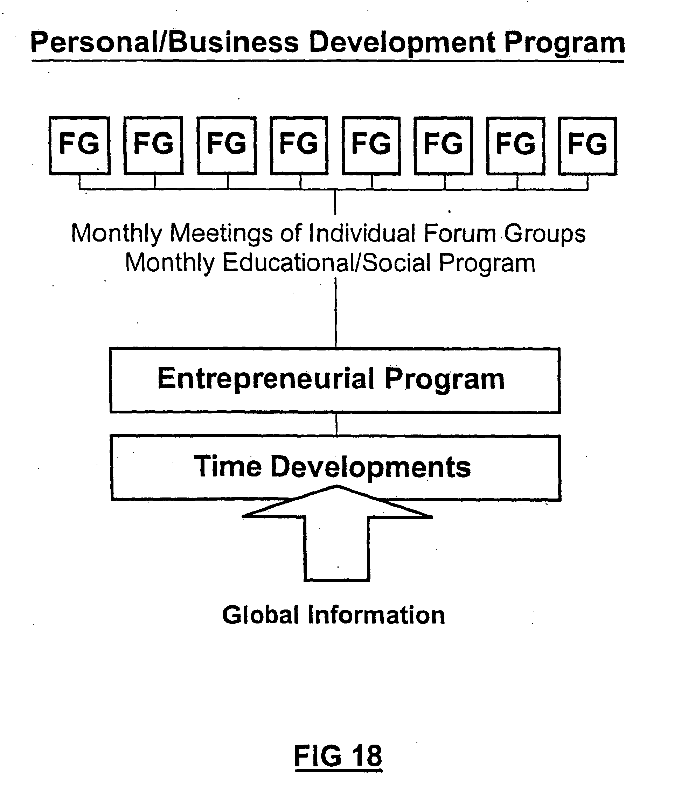

Fig. 18 is a diagram of the Personal/Business Development Program.

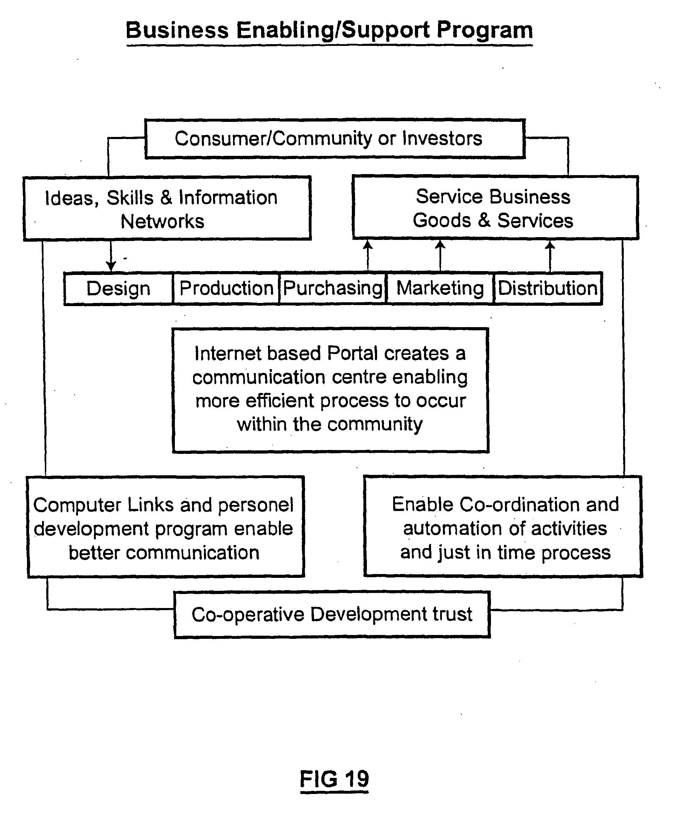

Fig. 19 is a diagram of the Business Enabling/Support Program.

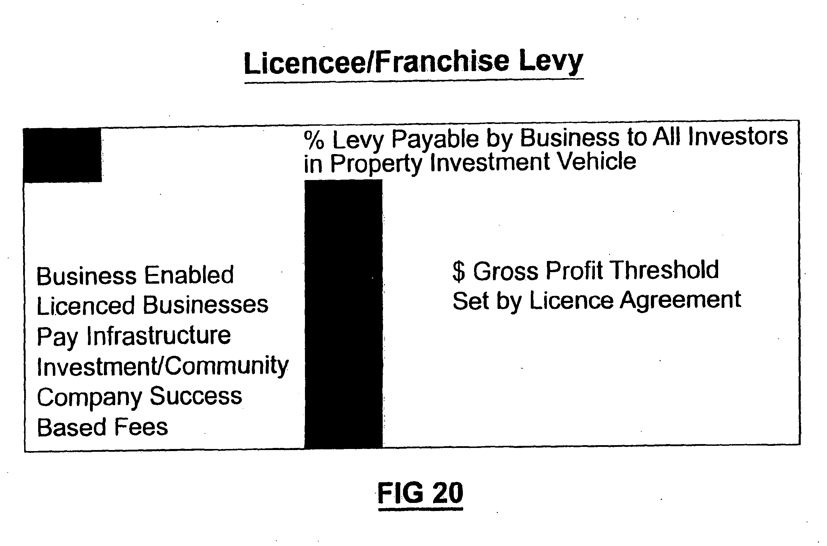

Fig. 20. is a diagram of the Licence/Franchise Levy.

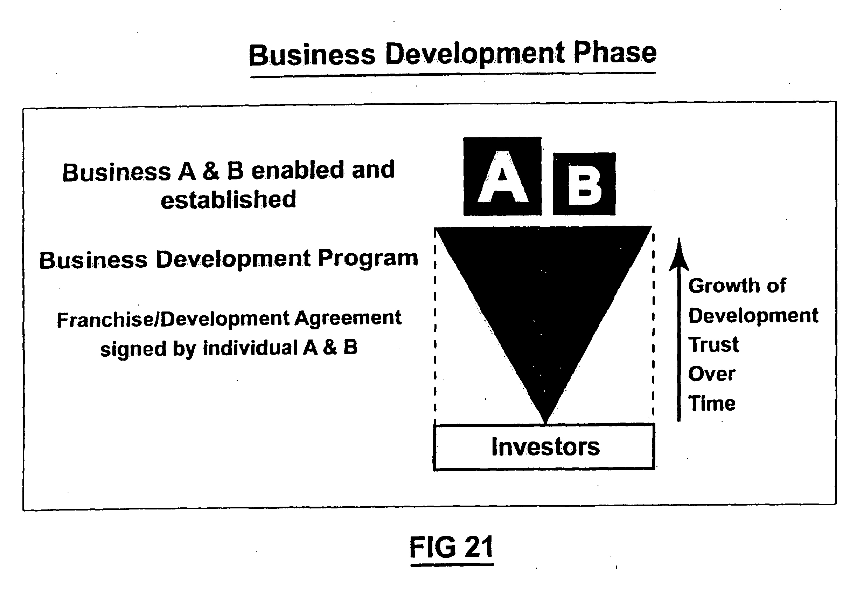

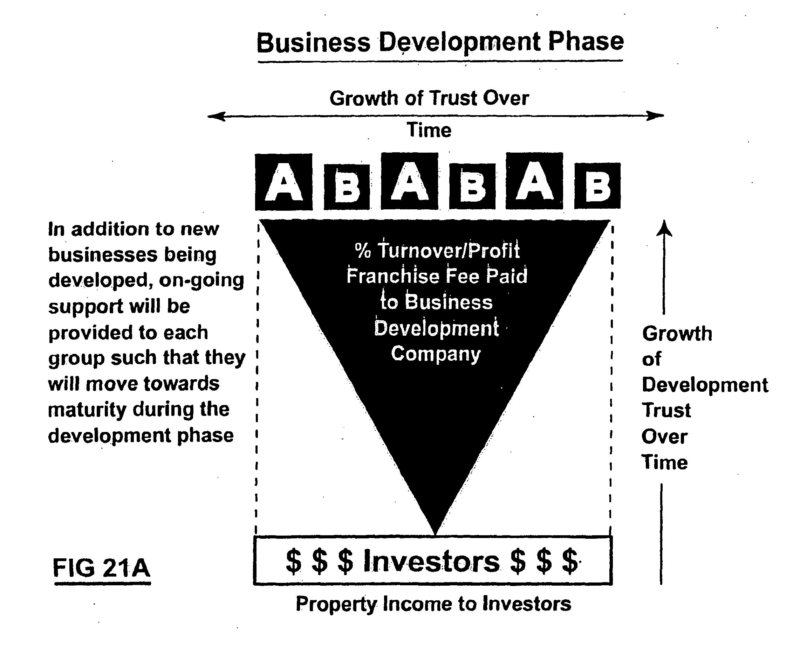

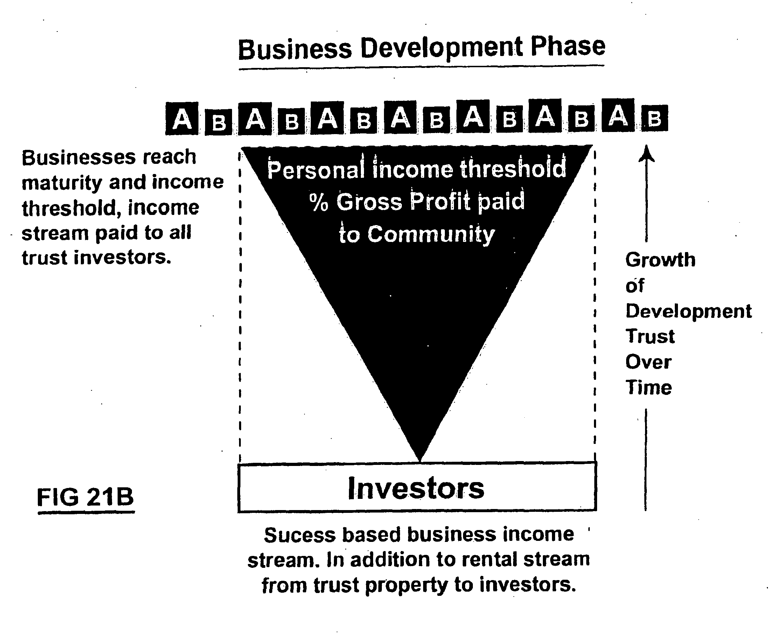

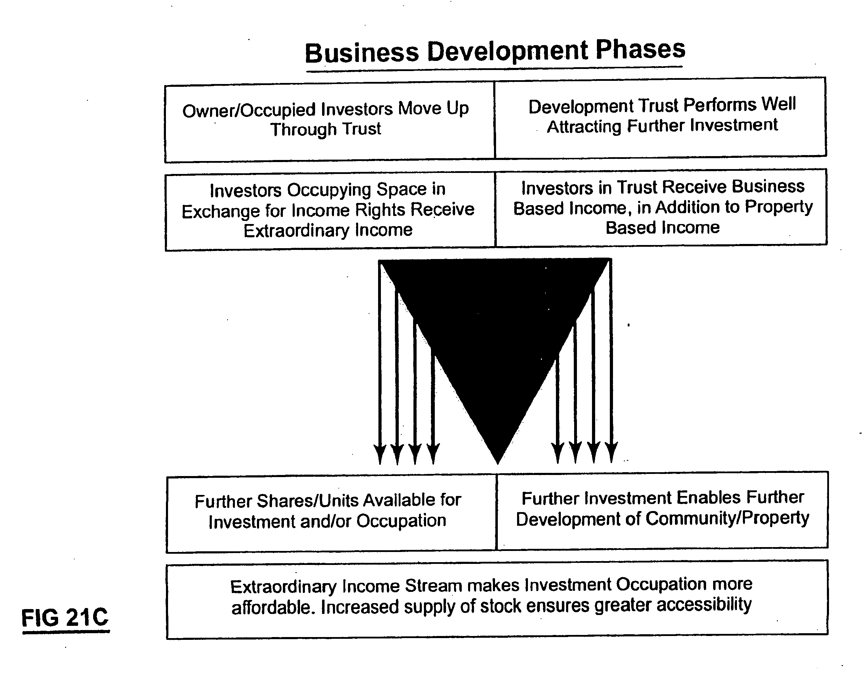

Fig. 21 is a diagram of the Business Development Phases.
Fig. 21A is a further diagram of the Business Development Phases.
Fig. 21B is a further diagram of the Business Development Phases.
Fig. 21C is a further diagram of the Business Development Phases.

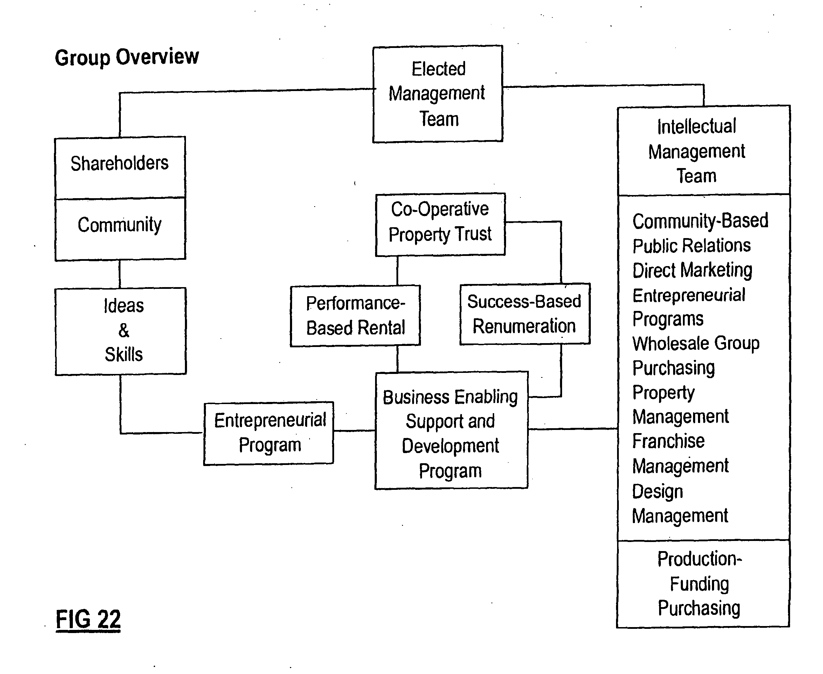

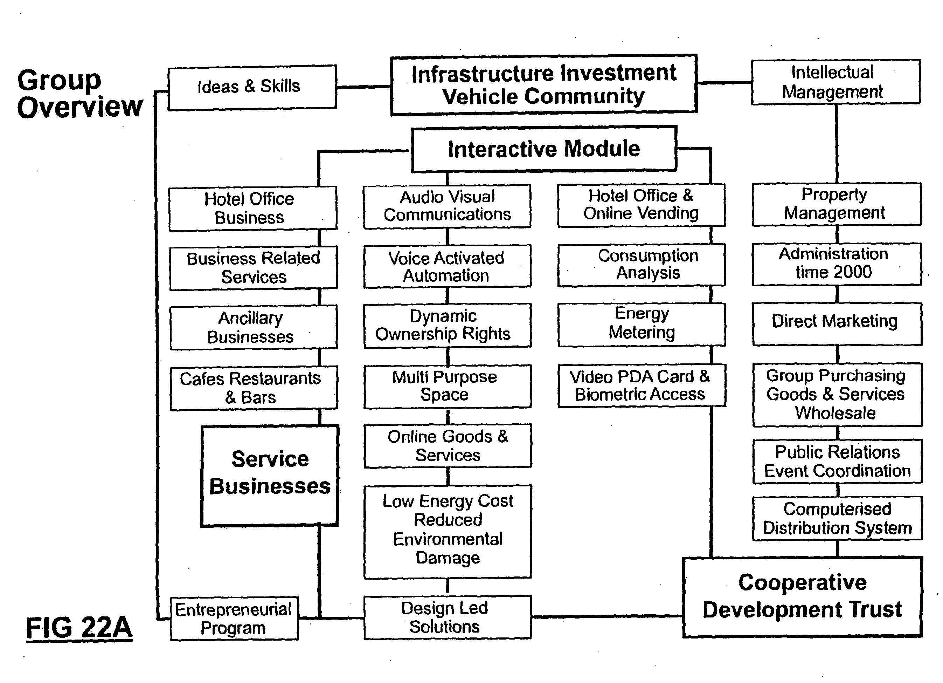

Fig. 22 is a diagram of the Group Overview.
Fig. 22A is a further diagram of the Group Overview.

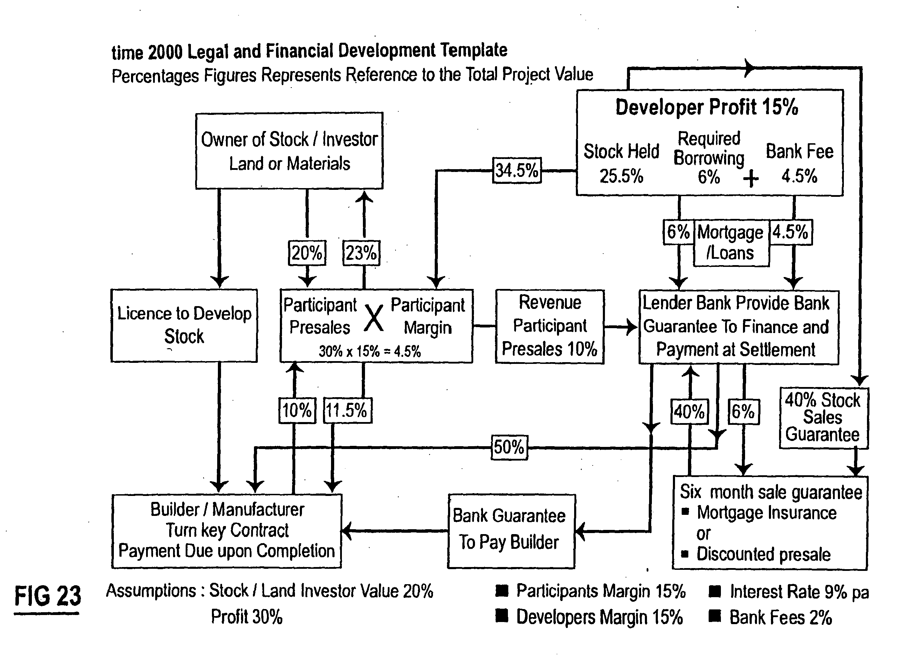

Fig. 23 is a diagram of the Legal and Financial Development.

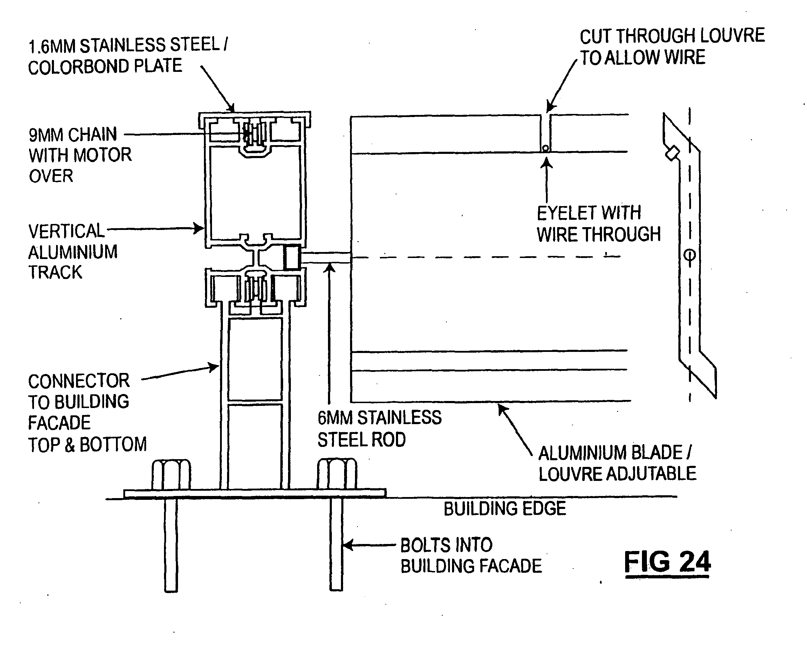

Fig. 24 is a plan view of a typical louvre.

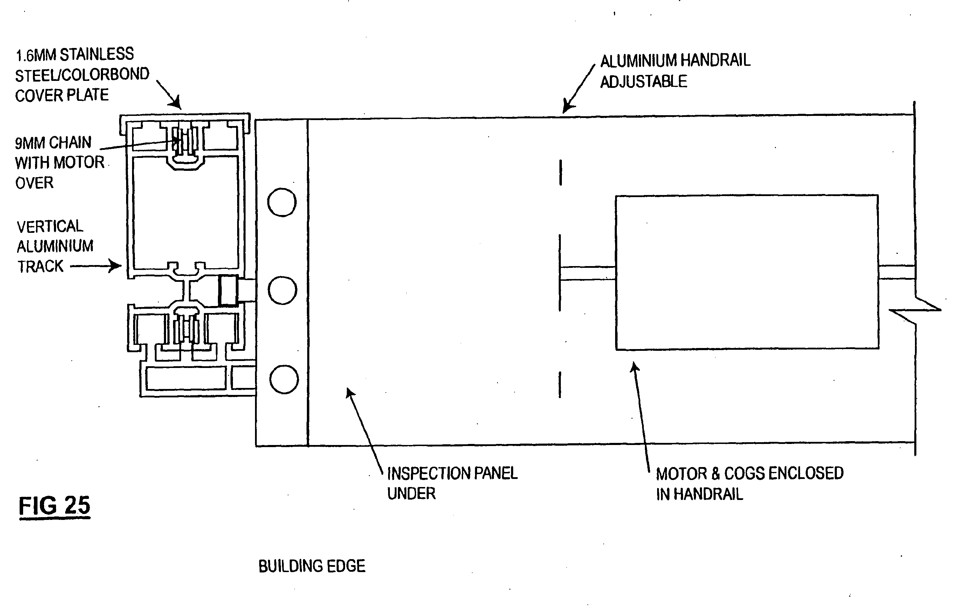

Fig. 25 is plan view of an adjustable handrail.

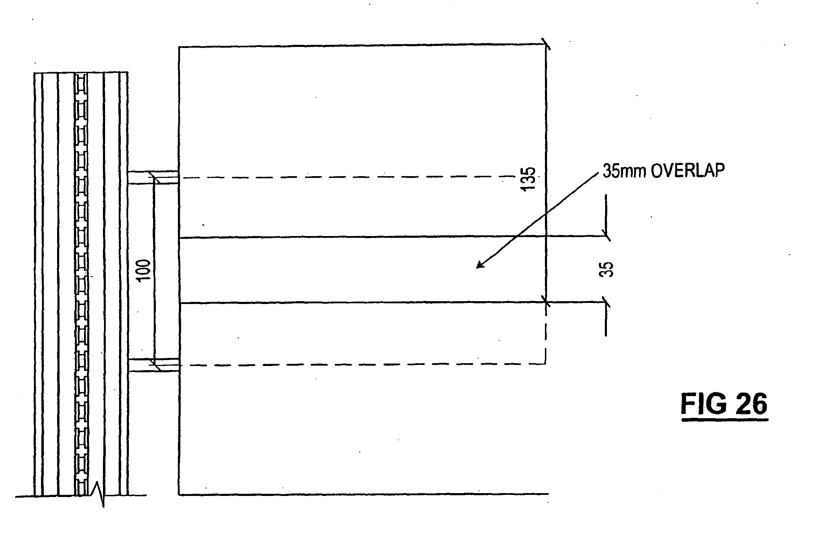

Fig. 26 is an elevation of a facade system.

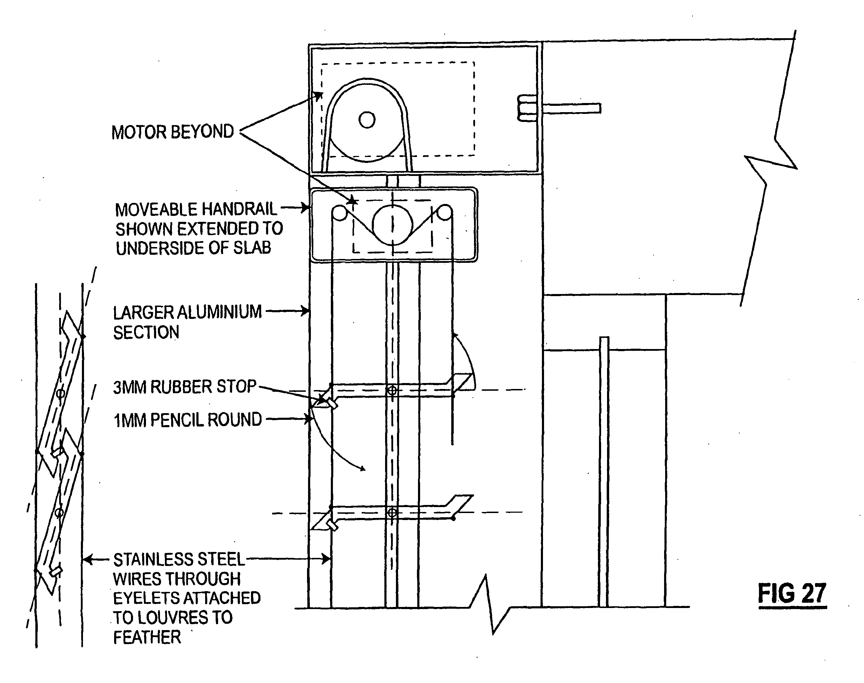

Fig. 27 is a sectional view of the facade system.

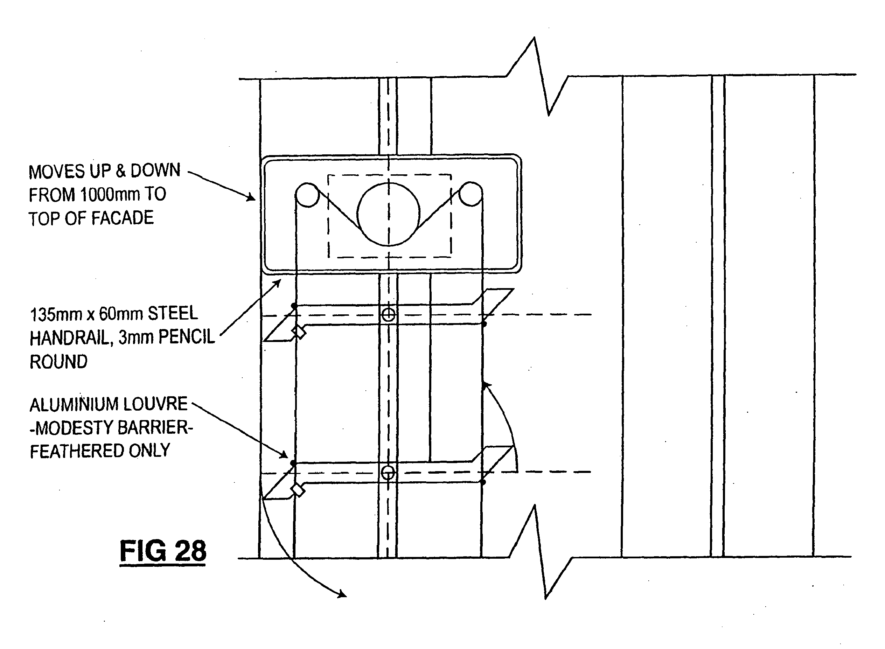

Fig. 28 is a view of a top section of a modesty barrier section of the facade system.

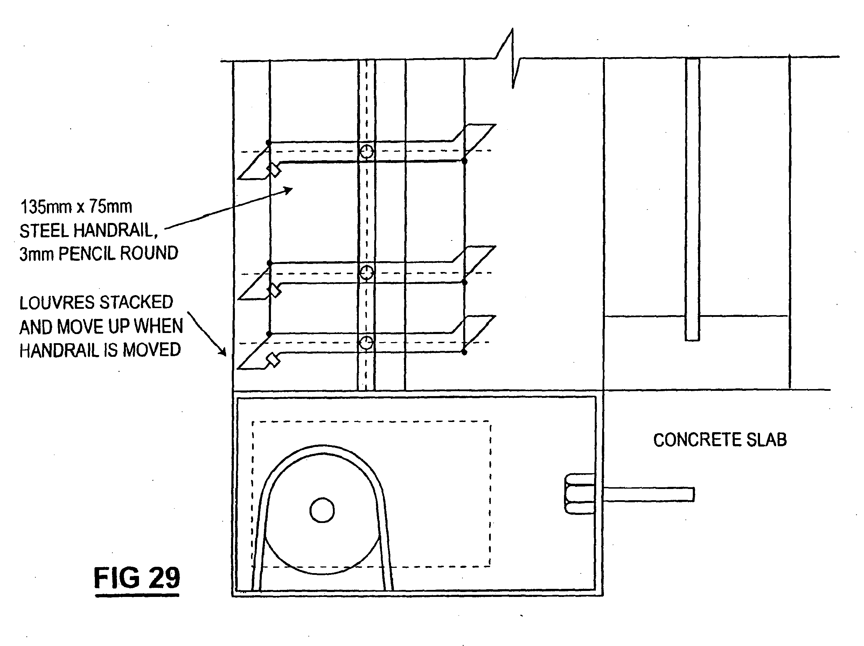

Fig. 29 is a view of a bottom section of a modesty barrier section of the facade system.

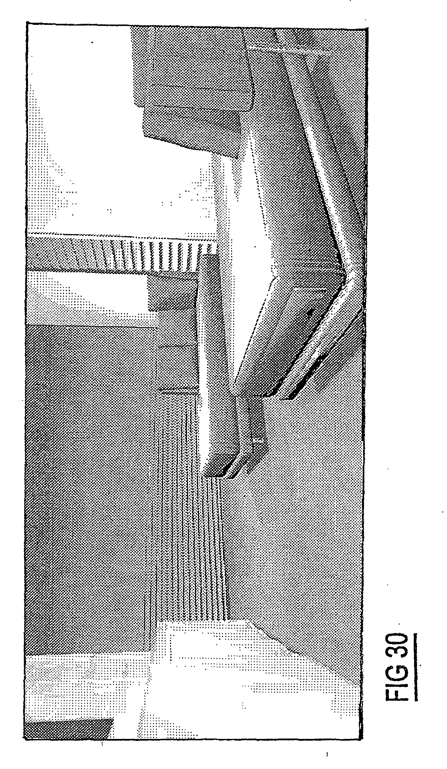

Fig. 30 is a perpective view of the louvre assembly.

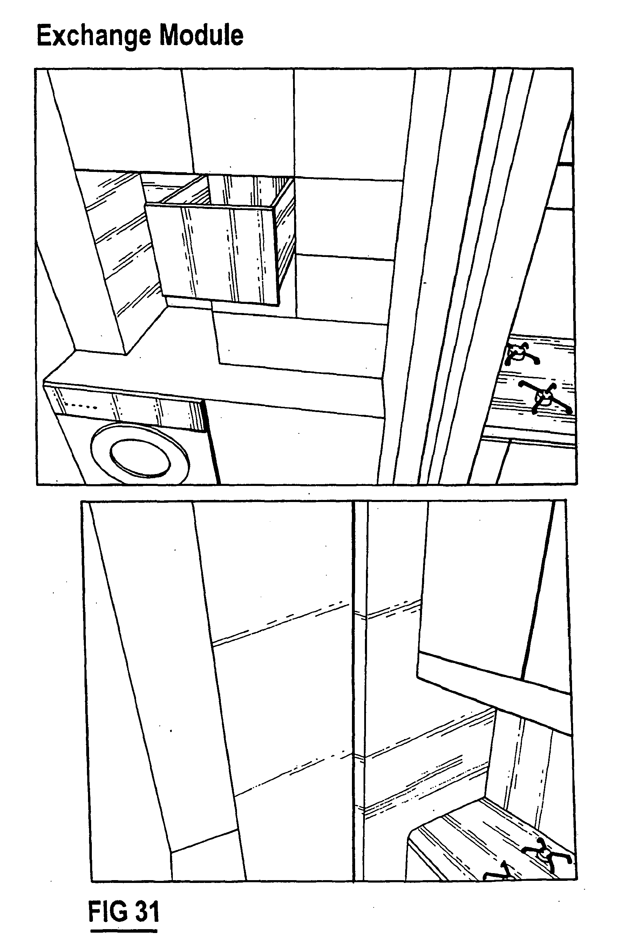

Fig. 31 is a view of an exchange module.

### Description of preferred embodiment

### 1 Introduction

There are four scenarios of use of a module by users:
- virtual space
- serviced office
- hotel or serviced apartment
- residential

These scenarios are not mutually exclusive, but are broad categories that define the operational and financial properties of the interaction between the individuals and the modules. There may be cases where the use of the space is a hybrid combination of these generic scenarios, for example, when the module is used both as an office and a living space.

The creation of various internal and external structural forms may be enabled through flexible design solutions. The module's cross-platformed chassis is capable of freestanding installations and may be suited to eco-tourism, rural and third world sectors.

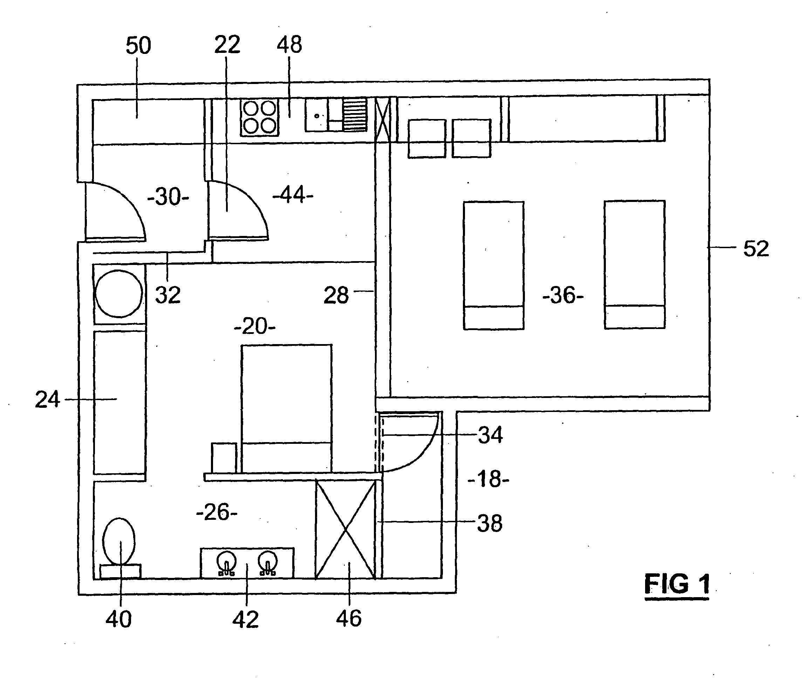

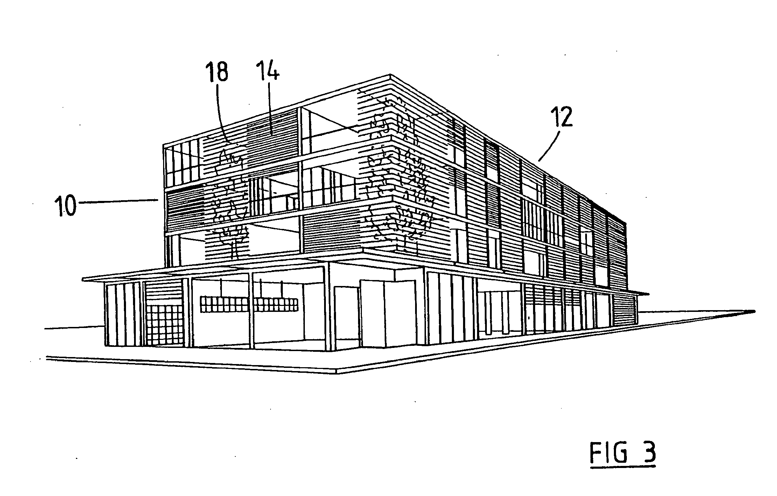

To first refer to Figs. 1 to 4 of the drawings, the module carries a high emphasis on environmental design.

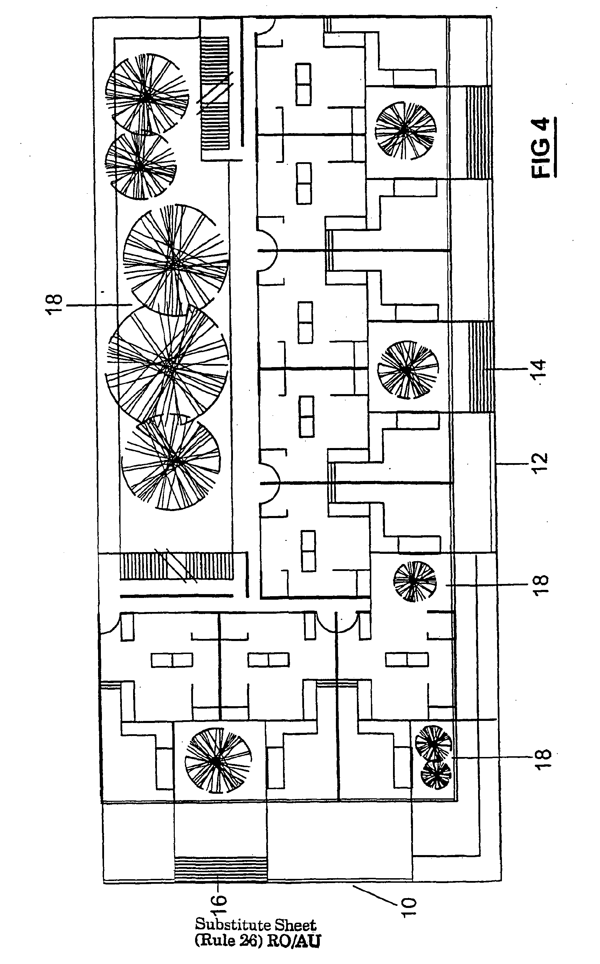

Each major floor of the building has a number of units or modules (see figure 4). In each module the main rooms are located on a raised mezzanine level, providing a reduced ceiling height (e.g. 2.65m) and, under the floor, a void ideal for plumbing and other building services. The mezzanine area consists of a main room 20 located off the entry hall 30. The room 20 is accessible from the hallway 30 by sliding door 32. The main room 20 has a built-in storage module 24 and a window or door 34 into a controlled garden environment 18. The room 20 also has a frosted glass wall system 28 which may be partially or fully removed, opening into the main living room/office/bedroom area 36 for further flexibility. The office/bedroom/store 36 may also provide a secure lockable area via lockable door 22 accessible by modular unit holders and not hotel guests.

Two service areas are provided. Firstly, a bathroom 26 with a full-height window 38 onto a controlled garden environment 18. The bathroom 26 is minimalist in design, containing industrial fittings, flush-mounted toilet system 40, single or dual vanity 42, and a sunken spa bath 46 which may have a shower over. The second service area provided is the security lobby 30 to each module, allowing for efficient interchange with the group's building services network via services shaft 50, which will have restricted access. The area 50 will house a standard 'interchange' module, consisting of separate, stainless steel removable compartments, accommodating deliveries of building services and rubbish recycling, and so forth. A small but functional stainless kitchen unit 48 is located in hallway 44, and provides a kitchen galley, which may be closed off and hidden away by simply sliding a cover screen (not shown).

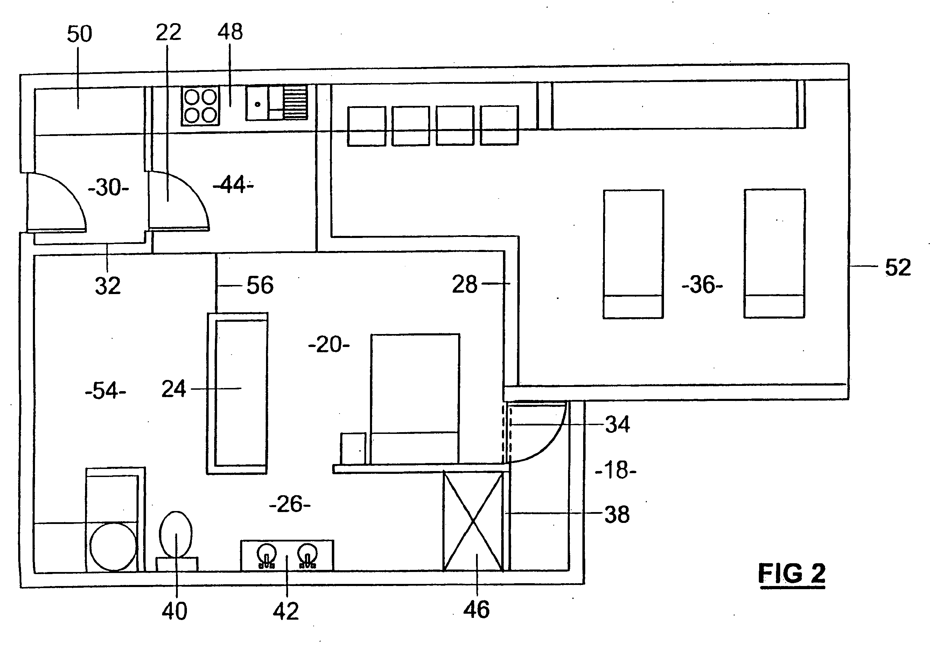

As shown in figure 2, for the larger interactive module, an extra room 54 is provided for multi-purpose use such as, for example, office, storage, child's bedroom, or the like. The room 54 is closed off from room 20 by sliding wall panels 56, which may be opened if desired.

The fixed building module may be designed to provide low and high rise configurations and may be suited towards inner urban and eco-tourism developments. Two modes may be designed, the larger providing an additional room or lockable storage area, enabling storage of personal possessions whilst the remaining spaces within the module and the occupants corresponding shares may be returned to the pooled income environment. This may enable the shareholder greater utilisation of their capital invested in bricks and mortar and enable maintenance of a home base.

The mobile module may be designed to create high performance cross-platformed building solutions and may increase accessibility to functional building space. The concept may be designed to take advantage of the low economic value of vacant sites within cities and the economies created by mass production manufacturing principles. The cross-platformed structural chassis may form itself into a container for integration into existing road, rail and shipping transport systems. The structural solutions may be engineered to enable stacking such that a six level building may be assembled on-site within a week.

### 2 Reconfiguration of components

The design principle of enabling the same space to be used for different uses over time is not only efficient but it also increases the ability of the property to obtain income. The transference of a module from one use to another may merely require the moving and/or replacement of some or all of the furniture, and possibly the reprogramming or alteration of certain services (eg telecommunications) to suit the requirements of the occupant and/or the use of the module. For example, an office may not require beds, but may require increased telecommunications facilities. This principle also applies to the living space, which can convert to outdoor living space.

Rapid re-configuration of a module to match the requirements of the customers may be required, and it may be that a module is used in more than one of the generic scenarios in the same twenty-four hour period. For example, it could be used for virtual space for a business meeting in the morning and as a serviced apartment in the evening.

The module involves mass production of standardised building spaces and streamlining construction systems components as a means of increasing building sophistication and affordability.

The spaces and their components will be manufactured, with the components being changeable and removable. The components may be manufactured in various colours and materials, enabling various design permutations and consumer choices over generic product. These components are easily fittable and exchangeable.

The design of the modular space allows the property status, to vary (for example: the modular building may move between the office, hotel and residential sectors of the real estate marketplace) and to provide for combinations of same to be varied with ease.

The building areas are designed as multipurpose spaces enabling them to move between sectors of the real estate marketplace, for example moving between office hotel and residential sectors of the real estate marketplace.

The internal fit-out may consist of a range of standard plug-in modular components providing a variety of function and form. The various fittings and accessories may be constructed from a series of standardised plastic injected molded components. The solid plastic components may be durable, easy to maintain, exchangeable, recyclable and may lead to an extended life cycle of stocks over time. The plastic components may be available in a variety of solid and opaque colours and finishes. The systems design may enable consumer choice creating personalised, functional and artistic assembly of a generic and affordable manufactured product.

Systems design may enable shipping of the sealed container containing the occupants elected range of plug-in components. After erection of the building, the components may then be installed on the outside wall created within the free space.

The removable wall section of the module provides a durable and weatherproof container for ease of transportation. Systems design may enable the removal of this wall panel during erection. Further utilisation of this panel may provide a structural end wall; portico/verandah section, roof and/or ground floor section and may enable establishment of additional free-space.

Similar systems may provide for assembly of the module in a freestanding environment. In this case, the modules removable wall panel may be replaced with a less structural, dual skin, wall component. The component may be designed to hinge out at floor and roof level. The insertion of structurally framed modular glass partitions and/or retractable glass facades may allow additional space to be created on-site.

The systems design may enable assembly of the modules in a checker board configuration and may enable the assembly of the modules such that the internal floor level of a module meets with the roof level of a module below. The systems design may enable the creation of free space between modules formed from the roof, walls and floor of adjacent modules. Streamlined design, engineering and assembly solutions may enable the easy attachment of modules with the ability to place vertical and horizontal floor loading through the building by creating in-series structural solutions.

The space itself is capable of adapting its use during the course of the day and may adapt from formal to informal residential living. The living area itself may convert to outdoor living space by opening back the glass operable facade and by lowering the external interactive screen allowing direct sunlight and air into the integrated living environment. The space becomes an external private domain and by its orientation with the sun and the external operable screen, the occupant has the option of controlling the ambient lighting levels. In parallel to the systems, the climate control automated screen function allows or rejects solar radiation in the most efficient manner and compliments the buildings energy management systems. The glass operable facade allows excellent natural cross ventilation. It also enables the adaptation of the living space to outdoor private space by lowering the interactive facade, creating an external balcony, allowing direct afternoon sun light into the space.

The space is designed for extreme flexibility as a means of increasing utilisation of the capital resources tied up in traditional building structures. The space is fitted out with unitised adaptable pre-manufactured components, operable internal walls, a cover screen over the kitchen, fold out bed/meeting room table/desk storage/Japanese den, formal living/day bed. The living space, its furniture and technologies enable adaptation from office to formal and informal residential. The office configuration may be complimented by the addition of a work station and desk components which fit into standardised sockets and fittings in the module.

The space may be arranged in any combination, for example, the internal walls may be opened, closed or positioned in any setting; the bathroom may be left open to the room adjacent with both rooms have the option of opening and ventilating through the bio-climatic garden void.

### 3 Checkerboard configuration

The structural solutions may be engineered to enable stacking such that a six level building may be assembled on-site within a week.

The creation of various internal and external structural forms may be enabled through extremely flexible design solutions. The module's chassis is designed with one fixed wall incorporating an integrated structural truss. The remaining walls, floor and ceiling each consist of separately removable, fire-rated panels. This enables the arrangement and possible re-arrangement of internal spaces in both vertical and horizontal amalgamations. The modules cross-platformed chassis may also be capable of freestanding installations and may be suited to tourism, rural or third world sectors.

The systems design may enable assembly of the modules in a checkerboard such that the internal floor level of a module meets with the roof level of a diagonally connected module below. The systems design enabled the creation of free space between modules formed from the roof, walls and floor of adjacent modules. Systems design may enable shipping of the sealed container containing the occupants elected range of plug-in components. After erection of the building, the components may then be installed on the outside walls of the space after assembly of the structure.

The mobile modular structure consists of a structural chassis with an integrated truss in one wall. The floor and ceiling each consist of a series of three separately removable and fire rated panels. The two walls at each end are open and may be fitted with an operable interactive glazing and façade system, or may be fitted with various wall panels or a plug-in front door and exchange module component. The removable wall, running the entire length of the module, is removable and creates a durable and weatherproof container for ease of transportation. Systems design may enable the removal of this wall panel during erection. Further utilisation of this panel may provide the required in fill structural end wall, roof and floor; portico/verandah section, roof and/or ground floor section of the positive spaces created during assembly as well as providing weather protection for pedestrian access in and around the building.

The modules vertical and fire rated service duct enables the incorporation of structural bracing, which combined with the integrated wall truss and the remaining structure to create an integral box chassis. Streamlined design, engineering and assembly solutions may enable the easy attachment of modules with the ability to place vertical and horizontal floor loading through the building by creating in-series structural solutions. The modules separate structure cells may be joined together in series to provide a combined structural solution. This enables the ability to hang or bridge the modules into various formations and urban forms.

Similar systems may provide for assembly of the module in a freestanding environment. In this case, the modules removable wall panel may be replaced with a less structural, dual skin, wall component. The component may be designed to hinge out at floor and roof level. The insertion of structurally framed modular glass partitions and/or operable glass facades may allow additional space to be created on-site.

The integrated floor and ceiling panels divide the modules in a horizontal axis and are removable. They also enable linking of the module in vertical and horizontal forms. A plug-in modular staircase component may be added linking the various levels internally within a building.

Effectively, the modular building might be placed on a site for 10 years. After construction and erection of the building shell, the internal spaces may be progressively configured in accordance with the varying requirements of its occupants at that time or as the occupant's requirements change.

The structure of the internal spaces may vary in size and form. For example: the size, use and form of internal occupancies in the building may change each year. The solution creates a more fluid flow of occupancy enabling the module to meet the highest commercial levels of demand thereby also reducing vacancy levels.

A range of plug-in and adaptable components have been designed providing for flexible layout and use configurations. The flexibility of the modules enables designs to be tailored to the varying economic and cultural standards.

The modules economic life may also be extended by enabling the commercial life cycle to be engineered by building stocks being re-cycled with around the world catering to various economic markets over time.

### 4 Exchange module

The exchange module is a device designed to provide more effective interchange for service delivery and exchange of on-line goods and services.

It forms an area located between the common area outside of a building occupancy and provides for the effective exchange or collection of goods without requiring attention of the occupant. The system design enables building occupants to order on-line via the Internet and enable for the secure exchange and/or storage of goods delivered by service providers.

The system enables building occupants to streamline their lifestyle by utilising online businesses to deliver and exchange household consumables and/or waste. The exchange module provides an automated interface between the buildings functions and the external environment. Systems design enables the building occupant to send data concerning delivery procedure and to permit the required access to the exchange module for exchange. Access to an exchange module may be granted in numerous ways, for example: a PIN number may be sent to the service provider for each delivery. Effectively, the PIN required for acceptance and exchange of goods would monitor the delivery within the systems design. Upon completion of the delivery, the PIN would become void.

Other identification systems may ideally be linked to the building space's management computer. Ordering, monitoring and logging the consumption within buildings can be enhanced by the creation of the networked and automated exchange module.

The module may vary in size depending on building type. Two examples have been prepared.

### Example 1

The first is a smaller style exchange module, which may be suitable for smaller, compact households. The unit is designed to fit into the outside wall of an entry or service entry to a building occupancy. The unit may be designed to provide exchange for various user types.

The unit is designed with a series of compartments, in this case with three external doors; each compartment would contain storage for various classes of goods. In this case, for example a fridge and freezer has been incorporated to provide for storage of perishables whilst in transit to the kitchen. The unit itself is accessible from inside of the occupancy and may be connected to or adjacent to a particular occupancy use, for example access direct into the kitchen.

The unit may consist of a series of plastic and/or colour coded containers. These modular, removable and exchangeable compartments may be designed to form a closed loop supply chain between on-line service providers and consumers to enable efficient packaging of deliverables with less waste.

The modular compartments by colour may be delineated for various levels of hygiene required by the respective service providers or similar.

The modules may contain separate colour coded exchange modules for household waste that may be effectively linked into recycling networks.

### Example 2

This module is slightly larger in configuration and forms a security lobby or service/delivery area. This exchange module may also be located at the entry or service entry of a building space.

The module again consists of a number of components enabling effective exchange. Whilst the separate compartments may or may not be individually secured the entry into the exchange module from common spaces provides restricted and monitored access by service providers.

As in the previous example, the on-line ordering systems of the building space may be networked to the access control and monitoring systems of the exchange module, providing automated operation of the systems. The exchange module example contains more space for larger deliveries of groceries, hot meals and consumables that may be placed in appropriate storage containers, allowing for time intervals between delivery and retrieval.

The module also enables for delivery of clothing and laundry. It also provides colour coded bins, located within an exhaust extracted and sealed compartment. The modular bins may link into recycling networks. The level of automation of the exchange module may vary in that for example rubbish collection might be activated through a building's on-line service networks or they may be activated by automated sensors or the like.

### 5 Louvre assembly

The drawings shown the module's automated façade may interact with the air conditioning control systems to reduce heat load external to the glass/skin or automatically take advantage of passive solar gain. The interactive and automated façade system may be designed to reduce the capital cost and running expenses of hotel, residential and/or office buildings. The design solution seeks to reduce the need for separate external balconies, façade finishes, handrails, outdoor furniture, and internal blinds.

The automated operation of the interactive façade enables the systems to take advantage of reflected light thereby reducing dependence on artificial and controls radiation whilst maintaining access to natural ventilation. The invention seeks to enable an occupant private internal space adjacent to the exterior facade to be converted to an outdoor living environment. The handrail may be raised to ceiling height providing an automated and environmentally interactive solar screen by lowering the handrail. The blades are fixed at either side by a guide enabling them to fall and neatly stack below creating a privacy barrier between the unit and the street below. The system may be constructed from metals, plastics or other suitable material.

The system consists of a series of vertical mullions fixed externally to the building's glass façade. The mullions, made of plastic, aluminium or other material, house a continuous loop chain. The chain returns via a cog or slide at its base and is connected to a cog at its top.

The mullions fit either side of a window opening. A header box joins the two mullions at the top of the window opening. The box houses a shaft and electric motor linking the cogs and chains within each mullion.

By connecting a slide bracket to each mullion and the chain, a handrail may be positioned between the two brackets and mullions. A height adjustable handrail is created and is operated by the overhead electric motor. Preset limits prevent the handrail lowering below required regulations.

The blades themselves are loosely attached into the vertical channel of the mullions at either side of the opening. The fixings and the internal strength of the blades and all connections are designed to meet standard regulations for handrails.

The blades are connected to the handrail by a series of vertical cables, which enable the raising and lowering of the blades with the handrail and automated adjustment to their pitch. The blades are designed of solid extrusion or plastic injected moldings, to provide strength and durability.

The height adjustable handrail is hollow and may be made of aluminium, steel, plastic or other materials. A removable panel on the underside provides easy access to an internal electric motor. The motor is designed to drive a continuous shaft, connecting a system of rollers located within the handrail and cables of string or other material, connecting the blades below.

The shape of the blades has been designed to reduce penetration of rainwater through the screen whilst also providing a light shelf reflecting natural light deeper into the space when open and creating a weather resistant barrier whilst closed. The design of the blades enables convenient over-locking, a rubber seal, running the length of each blade assists with the weather protective qualities of the design and minimises the emitance of noise from the blades rattling against each other.

### 6 Environmental control

### Ventilation

Draught free and user/automatically controlled natural ventilation provides mechanical cooling and ventilation systems being reduced or redundant.

Design criteria enabling good natural cross flow of air through the modules and incorporation of warm air chimneys designed to create natural updrafts through non-mechanical means are utilised. Solar chimneys and ventilation stacks enhance the performance of the natural ventilation.

Effectively, the module occupant may select the desired temperature, climatic condition, ambient lighting levels and air change rates within the space at any time. The Melbourne climate lends itself to the application of natural ventilation for up to 50% of the year.

Where natural ventilation does not provide adequate comfort conditions a mixed mode or hybrid approach may be adopted. Mixed mode allows for the internal conditions to be maintained by natural ventilation when weather conditions permit with the extreme climatic conditions controlled by the air conditioning.

The application of high comfort passive air conditioning-solutions such as chilled ceilings is a further option.

### Air Conditioning

Each building's rooftop weather station and interactive energy management system, in conjunction with climate control functions of each module's computer, may enable automation of the interactive façade system. The systems operation may enable the rejection of solar heat outside of the buildings operable glass façade or take advantage of passive solar gain and thermal storage within the modules exposed floor. The architecture of the interactive energy management systems may enable increased efficiency. The design configuration may be scaled to provide extremely efficient solutions for larger buildings, and for individual, freestanding, modules/units in either fixed or mobile configurations.

Air conditioning of the modules may be serviced from geothermal or co-generation heat exchanges of the hydronic air conditioning loom. The building's management systems may analyse available data and may vary the rate by which the co-generation power and heat source provides energy together with the rate of flow within the looms in order that energies may be distributed efficiently upon demand. The appropriate amount of energy may be sourced and delivered efficiently to each module by a variable flow water loom. A variable speed pump on the supply of water into the loom may ensure a minimum flow and enable exact replacement of lost energy and thereby maintaining a minimum temperature within the loom.

The energy management systems utilise interactive evaluation and enable the management computer to apply logical reactions in various circumstances. For example, a weather station on the building's roof will emit data regarding external temperature and solar radiation. At the end of a hot day the temperature external to the building may fall. At the appropriate time the rate of fall of temperature, or within a range of temperatures, or at a particular temperature, the systems will stop the cooling cycle and the flow of water within the loom will stop until a call for heating is required. The computer may adjust the interactive façade in order to take advantage of passive solar gain from the afternoon sun enabling storage of energy within the floor.

As the temperature continues to fall, the computer may change the air conditioning from the cooling to the heating cycle. As the modules climate control systems require heat energy, the system will distribute through the loom, the required volume of both water and energy to service the precise requirement of the module. A temperature sensor at the end of the loom will account for energy loss during the distribution process. The system may also be programmed to vary loom temperature when external temperatures become more extreme.

The system may enable better response times than may be required for heating the system, and will adjust the heat to flow ratio of the systems management computer. Through co-generation, heat exchange will simply apply more energy to the loom. Flow will be determined by the number of modules requesting heat whilst the loom temperature of the operating system will be increased.

For hotter climatic conditions, a chiller or other cooling energy source may be added to the loom after primary energy exchange with the buildings geo-thermal loom.

A variable speed pump and temperature sensor may be located at the end of the air-conditioning supply loop and may ensure that the required temperature within the loom is maintained. The total heating or cooling requirements of modules located on the loom, in conjunction with the interactive building management systems may enable the sourcing of the precise energies to maintain the loom on heating or cooling cycles. An automated T-intersection valve located after the variable speed pump may divert flow within the sealed system via the geo-thermal energy exchange loom, returning directly to the air conditioning loom for distribution. An automated valve and meter will link each modules energy exchange systems with the supply loom, and will account for and regulate flow of hydronic energy from the supply loom to the modules thermal exchange systems. Water will pass through the modules integrated energy exchange system returning by a low-pressure loom to its supply point.

The meters will emit data to the management systems for accounting and evaluating the requirements of a module in conjunction with other information received. The automated valve will enable acceptance or rejection of energies from the loom whilst also varying the flow rate independent of the supply loom.

Accordingly, if the internal and external temperatures of a building remain the same for extended periods, the flow rates might be reduced throughout the system minimising the loss of energy in distribution.

### Solar gain and solar rejection

Solar gains can be controlled through careful consideration of the building materials, glazing types, external shading, orientation, and so forth. The selection of glazing types should be made to limit summer solar heat gain and winter solar heat loss. Double glazing, low E, solar reflective glass and reflective films may be wused.

The northern 10 and western 12 elevations of the building's facades have independently interactive aluminium louvred screens 14, which can prevent entry of heat from beyond the glass facade 52. The blades 16 can articulate according to the sun's position over the site and its intensity. The system is linked with the climate control functions of each module's automation system and each garden environment's independent automation system. The ambient light levels may be set and regulated by the occupant though actuation of the louvred screens 14.

Modules having direct frontage to northern and western sunlight n the southern hemisphere may enable indoor living space 36 to be converted by removing the retractable glass wall 52 allowing cross flow of air through the module. Simply by adjusting the angle of the louvres 16 of the louvred screen 14, or lowering and stacking it, the occupant has the option of allowing direct sunlight into the space 36. The deletion of separate external space has enabled provision of more spacious living spaces within the module for the same price.

The general feeling of well being obtained by having garden and trees adjacent to living space cannot be explained. Generally however, the fixed modules will have two or three storey atrium garden voids 18 containing a large trees and other shrubbery. These controlled environments may be protected from the external environment by a sealed glass curtain wall facade, which will also be screened by the attached external louvred facade 14. Air vents (not shown) at the ceiling and at the base of these voids will enable convectional and evaporative cooling.

Each module's rooftop weather station, in conjunction with climate control functions of each module's computer, may enable automation of the interactive facade system. The systems operation may enable the rejection of solar heat outside of the buildings operable glass facade or take advantage of passive solar gain and thermal storage within the modules exposed floor. The architecture of the interactive energy management systems may enable increased efficiency. The design configuration may be scaled to provide extremely efficient solutions for larger buildings, and for individual, freestanding, modules/units in either fixed or mobile configurations.

### Ambient lighting

This prismatic glazing' can enhance the performance of daylighting systems restricting direct light from falling on occupants, redirecting it towards the rear of the space where natural lighting availability is lower. Light shelves are also used to provide diffuse natural lighting to circulation spaces, with translucent panels in the floor transferring natural light to below.

Artificial lighting typically accounts for between 25% - 35% of a building's energy usage. Designing a building for effective natural lighting permits the artificial lighting to be switched off for much of the year, which has the added benefit of reducing the amount of heat being generated in a building and which requires removal.

### Conclusion

Reductions in a building's typical energy usage of 20% may be expected, if a balance is achieved between the need to reduce heat gains in summer and collected heat in winter. This can be achieved while maintaining acceptable levels of natural lighting.

The module's automated and interactive climate control systems may be integrated with each module's interactive facade, either taking advantage of passive solar heat in colder climates or minimising solar radiation in warmer situations. Air movement may be provided by design of systems without mechanical means for hygiene and energy conservation (except for exhaust extraction systems).

### 7 Energy management system

The module's interactive energy management systems may run applications of the various systems based upon energy demands of all module's in the building, the climatic conditions, and re-distribute power through the grid between various buildings within the groups' holding, and effectively merging the demand requirements within the community. Additional power may be purchased on a wholesale basis from the local power supply. Consumption costs may be redistributed to module occupants based upon consumption but at discounted rates.

### Introduction

In-house computers located within the module/unit may automatically interact with each individual building services computer and the building groups remotely hosted building management systems via the Internet. The in-house computer may provide automated control and function, and may interact with the buildings automated access control, waste management and energy management systems. Interactive performance with the building's energy management systems may provide more efficient interactions for the sourcing and application of energies based upon actual demand. Further links with the building group's management systems may enable another dimension for the sourcing and application of power between group buildings via the grid.

The building systems computer may operate the variable flow rate heating and cooling hydronic loom which may source the required energies with co-generation heat exchange via geo-thermal exchange. Similarly, hot water and electricity requirements may also be passed to the building's systems management computer, which may utilise data available to determine, source distribute and account for occupants requirements in the most efficient manner

Systems design for efficient distribution of hot and cold water to the modules and the provision and distribution of required energies for climate automation integrates the assembly of interactive and networked sensors, variable speed pumps, automated valves and integrated electronic metering. The system design may provide a revolutionary approach to natural resource recovery and distribution systems within buildings.

### Power

The building groups processing computer may be able to more effectively balance power generation potential of the groups buildings at any point in time and re-apply the same energies through the power grid in order to better match varying supply and demand levels of various buildings in various geographical locations. This may also minimise the volume of energies purchased by the group during peak supply tariffs.

Communication from the module's automation computer may enable the building's management computer to maintain current data regarding the building's total energy requirement. In conjunction with data from the building's rooftop weather station and other relevant inputs, the building's management computer may respond to the sourcing and application of energies in the most efficient manner.

The power generation unit may be used to supplement the power requirements of the building and may be programmed to supplement intake from grid supply during peak periods or provide total self-sufficiency. The systems design may enable a heat source from the building's power generation unit to provide a parallel relationship between the demand requirements of power and heating in sequence. The solar/geothermal solution compliments the overall relationship. The combination may be suitable for extreme and variable climates and may be scaled at any size.

The collection of solar power during warmer seasons complements the building systems providing energy supply to the air conditioning looms variable pump. During colder months, when the integrated solar collection becomes less effective, the power generation unit may substitute supply and in parallel provide co-generation energy required meeting the increased heat requirement of the building.

### Heating

An in-floor hydronic heat exchange system is fitted to each module with an instantaneous gas furnace, which may also provide hot water to each module. In larger complexes underground heat exchange, may be added to the system. Generally, the earth will provide a constant temperature (approximately 17°C) which can be boosted in winter and cooled during warmer months. When on automatic the climate control system may gain in efficiency by allowing direct sunlight onto each apartment's floor slab, creating a heat-bank effect when appropriate. When on automatic it may maintain the desired room temperature in an efficient way.

### Solar supply

Solar power may be collected from an integrated roofing system to compliment electricity supply; a gas fuel cell may provide electricity supply to the building and heat source may be produced as a by-product. The heat may be coupled with a ground water geo-thermal energy exchange system. The by-product energy may be used to heat a water loom providing hydronic floor slab heating and cooling of the modules. The heat source may also be used to run a refrigerated chiller, providing further, secondary water cooling in the geothermal loom and providing cooling to each module hydronic energy exchange.

### Water heating

Primary heat exchange may be taken from the organic processing, secondary heat. Exchange is provided by the building gas fuel cell. The hot water is then distributed to each module via the continuous hot water loom. Flow rates will be determined by total hot water demand. Automated and networked thermostatic tap values may help minimise water wastage at the supply points.

Hot water supply requirements of the modules may be serviced from geothermal or co-generation heat exchanges of the hydronic air conditioning loom. Computer automation may vary the rate by which the co-generation power and heat source provides energy based on consumption data provided by the modules control system. The appropriate amount of energy may be sourced and delivered efficiently to each module by a variable flow water loom. An automated pump on the return supply of water may ensure a minimum water temperature before returning to the heat exchange reservoir at mains pressure.

Hot water supply may be provided to the bathroom and kitchen of each module directly from the water supply loom providing immediate hot water and minimising wastage on delivery. Utilising mains-pressure energy, water may be passed through the primary and secondary heat exchanges. The building's vermiculture waste-processing unit may provide a free-of-charge primary heat recovery source, whilst secondary heat exchange may be provided by the building's co-generation power supply unit.

### 8 Water management system

As shown in the drawings, the domestic cold water supply may be drawn from the authorities main through a back flow prevention device to avoid back contamination.

Distribution is through either a solar powered booster pump from site storage, or by direct supply from mains, depending upon the building height and the mains supply pressure. Rainwater may be treated by reverse osmosis from solar power to supplement the domestic water supply. Mains supply water may be blended with the treated roof catchment rainwater to reduce the total cost of mains supply water purchase.

The water may undertake processing within the sealed treatment unit and may then return via ozone filtration to the building's black water storage facility. The water may be distributed by pressure pump to provide 70% supply for re-use through the building toilet systems and in garden watering systems. Roof rain water collection system with a minimum level mains water backup may provide the additional 30% supply of fresh water required to prevent the buildup of enzymes within the closed water recycling loop.

All of the hot water reticulated pipework may be polypropylene or polyethylene that is insulated to restrict heat loss and sound transfer, and gas piping may be nylon and polyethylene.

Natural gas is used as the heating fuel for hot water heating, as well as air conditioning and space heating. A pre heater may be used on the gas flue to preheat the incoming water supply to the water heater. Gas piping may be nylon and polyethylene.

The mains pressure hot water supply system may pass water through the primary heat exchange pipes contained within the vermi-composting treatment plant which may be located in the basement of the various buildings.

As more modules consume hot water from the supply loom, mains pressure may pass water through the primary and secondary heat exchanges. As more energy may be required, the power generation may increase output. The addition of solar integrated roofing may compliment the performance of the systems architecture.

### Water collection

Rainfall run off from pavement and ground can be stored for re use as wash down, sanitary flushing, irrigation and laundry use after treatment. The treatment would be disinfection and filtration. Rainfall detention on site could also be utilised for fire fighting with an authorities' main supply back up.

Roof water may be re-used as drinking water provided appropriate filtration and disinfection processes are utilised. Roof water can be used as described after appropriate water treatment has been carried out.

Irrigation water run off could be collected, filtered and re-used for further irrigation as it is rich in nutrients.

### Water treatment

A biolytic filter may separate and process the water from sewerage the waste material together with biodegradable waste from the buildings will be converted through the process of vermiculture into worm castings, a hybrid fertiliser which will be vacuum-extracted from the sealed and computer networked processing unit. After processing the black water passes through an ozone sterilisation process to bulk storage in-situ. The water may be applied during the year for garden watering and provide up to 70% supply for re-use in each module toilet system.

All food scraps and vegetable waste generated by the building may be deposited into the building's vermi composting vegetable and sewerage waste unit. Sewerage and wastewater may enter at the top of the unit. Solid material may automatically be separated from the liquid waste and undergo vermi composting techniques utilising worms in the breakdown of waste matter. The residue worm castings may be automatically vacuum extracted into large bags for distribution on gardens in and around the building.Mains water may pass through a primary heat exchange system integrated into the buildings bio-degradable waste processing unit.

### Recycle

All food scraps and vegetable waste generated by the building may be deposited into the building's vermi composting vegetable and sewerage waste unit. Sewerage and biodegradable waste systems may deposit directly into the unit. Solid material may automatically be separated from the liquid waste and undergo vermi composting techniques utilising worms in the breakdown of waste matter. The residue worm castings may be automatically vacuum extracted into large bags for distribution on gardens in and around the buildings.

The water may undertake processing within the sealed treatment unit then return via ozone filtration to the building's black water storage facility. The water may be distributed by pressure pump to provide garden watering and up to 70% supply for re-use through the building toilet systems. Roof rain water collection system with a minimum level mains backup may provide the additional 30% supply of fresh water required to prevent the buildup of enzymes within the closed loop water recycling system.

Alternative configurations may utilise roof collection as a means of providing a fresh water supply to the module depending upon the availability of quality local supply. The water conservation and re-use systems may reduce building dependence on environmentally damaging water supply, sewerage removal and storm water infrastructures.

### Conclusion

The water conservation and re-use systems may reduce building dependence on environmentally damaging water supply, sewerage removal and storm water infrastructures.

The buildings should conserve less mains water or provide self-sufficient supply and re-use systems and may not require removal of sewerage or storm water drainage off site. The reduced dependence on urban infrastructure will reduce the negative environmental effects of off site power stations, water supply and polluting water disposal systems.

### 9 Resource management systems

Communication from the module's automation computer may enable the building's management computer to maintain current data regarding the building's total energy requirement. In conjunction with data from the building's rooftop weather station and other relevant inputs, the building may respond to the sourcing and application of energies in the most efficient manner. Further links with the building group's management systems may enable another dimension for the sourcing and application of power between group buildings via the grid.

Computerised automation of the modules may enable the adoption of computerisation; automation, audio-visual communications, automated vending. Interactive energy management systems as detailed may be incorporated to provide plug-in connection to pre-manufactured and standardised looms enabling easy introduction and scalability of systems design on a modular basis.

Similarly, hot water and electricity requirements may also be passed to the building's systems management computer which may maintain a continuous total of the requirement of each of the modules.

A variable speed pump and temperature sensor may be located on the return supply of the closed loop air conditioning loom. The total heating or cooling requirements of modules located on the loom, in conjunction with monitoring change in air temperature outside the building may determine whether the air conditioning energy supply loom is on either the heating or cooling cycle.

The complex and interactive system integrates the assembly of interactive and networked sensors, variable speed pumps, automated valves and integrated electronic metering. The system design may provide a revolutionary approach to natural resource recovery and distribution systems within buildings.

The building systems computer will operate the variable flow rate heating and cooling hydronic loom which may source the required energies with cooling energy being sourced via geo-thermal exchange. Geothermal supply in colder climates with secondary heat exchange from the power generation plant in extereme climates the water will return to the heat exchange power generation plant.

Depending on the temperature of the return supply, it may return directly to the power generation plant. Heating of the individual building modules/units, water will either be sourced from geo-thermal supply for preheating before

### 10 Communications infrastructure

Each module's built in video monitor will provide cable and global satellite television, internet, email, direct communications with building management and provide an easy to use touch screen interface providing access to building services, which may include:
- meals
- washing
- business services
- groceries
- dry cleaning
- rubbish collection

The system may also be linked to a built in and electronically projected surround sound compact disc and recordable mini-disk or D.V.D. sound and/or video reproduction system. These services may be varied according to the nature of the use of the module and/or the requirements of the occupant. For example, the telecommunication needs of an office may be greater than for an apartment, but its "entertainment" aspects may be lower. The system may provide points around the module for telephones, printers and computers.

In each state there will be a central host site for the all location applications, with all communications between each location and the central host site using a TCP/IP private network connections provided by a system provider with privacy being implemented using encryption.

At each location host site for a nation there will be a number of platforms implemented that provide an instance of each application for each location.

All communications at a location will be transported over TCP/IP where possible - including television, video, telephony and other audio/visual communications applications.

Businesses operating from the modules may require the additional security and bandwidth provided by dedicated optical fibre connections - therefore optical fibre cable bundles may be put into the service ducts of buildings where the need is anticipated.

With the advent of the Internet, and improved communications, it is becoming apparent that our lives exist in physical space, and our mental in cyberspace. The mental space exists of our communications, our information data bases, and our access to information networks and so forth.

The Internet, the systems design of the module, and the personalised dynamic IP address will enable, (like a personal web site) storage of data and personal communications and module settings which may be lodged into the system, and enable dynamic telephone and video communications anywhere in the world (for the cost of maintaining web site and local phone call).

The built-in video screen may provide standardised access video communications (via the Internet, globally) and provide general Internet, computer, entertainment and networking interface between in-house computer and building control systems. Systems design may provide for real time download of video information.

### 11 Leasing

In traditional hospitality markets, the cost for space is usually significantly differentiated between commercial and residential property. The usage of the module is highly flexible, and is coupled with the ability to specify requirements for the space usage on-line when booking. Therefore the cost differentiator will be the quality and types of services that are delivered for commercial customers as opposed to residential customers.

Virtual space can be rented for less than one day for business meetings - typically for 6 or 8 hours. The individuals that use virtual space normally have high service level expectations including business communications, computing equipment, catering, secretarial and receptionist services.

Serviced office space is similar to virtual space, differentiated by the length of time that the modules are occupied. In serviced office space there will be office furniture rather than domestic furniture, and local computer desktops may be required. In the case of a hybrid requirement - one room in the module can be used as a bedroom and the other room as an office for a guest who has these needs.

There are two apartment space use scenarios:
- hotel or serviced apartment
- residential

Usage of the hotel or serviced apartment and residential space is essentially the same thing, primarily differentiated by the length of stay and the type of commercial agreement between management and the customer.

In addition to the usual manual bookings/confirmation by facsimile or over the telephone, individuals and organisations will be able to make and trade bookings for space over the Internet using an automated system operated by management. The hotel management package allows availability and prices to be queried and bookings made via the Internet system.

Similar to airline reservation systems, module bookings may be able to be guaranteed for a premium, as well as a discounted standby service. When a guaranteed booking is made but the guest does not arrive, the agreed price for the module will automatically be charged to the guest. This will allow higher occupancy levels to be maintained at times of low demand, and higher rates of return at times of peak demand.

Each location may have a team of concierges that perform a number of roles. Each concierge may carry a personal digital assistant enabling prompt attention to occupant's requirements.

In addition to security authentication and authorisation for access to different areas, the location requirements for the concierge team are as follows:
- Maintain rosters for the concierge team
- Manage the service requests from guests and re-assign them when it looks like a service agreement is likely to be broken - eg. a guest orders a meal to be delivered for a certain time and it has not arrived
- Page on-call staff when required
- Escalate service calls that are not being serviced promptly enough.

Check-in may be automated using kiosks at the ground floor entrance - where credit management checks will be performed and if necessary credit-card pre-authorisation and/or bonds required.

Checkout may be performed in the module by the customer using a Web browser interface via the module management application or the personal digital assistant.

Once checkout is complete, a concierge can perform a quality assurance procedure to ensure that the module and the chattels contained in the module have not been damaged or removed.

### 12 Module services

The network may provide direct and streamlined on-line ordering and delivery to the modules or to their exchange lobby. A user-friendly interface (potentially voice-activated) may be provided for improved interface with regular occupants using an established IP address, whilst a separate user-friendly interface with a built-in touch screen may provide control of all components and on-line services.

The relevance of physical space becomes less restrictive enabling better national and global business, social and cultural experience. The modules may be fitted with an in-house computer complimented by a pre-manufactured wiring loom, video screen, camera, microphones, sensors and full networking of all components and appliances.

Security access may be provided to the modules via bio-metric finger scan readers on each secured access point. Primary identification may be established by the finger scan on entry, secondary verification log in enables secure access to individual personal IP addresses (video communications, data bases, and so forth).

Identification may be logged in via bio-metric finger scan on-site via the automated hotel/office vending points located at the main access point of each building. The technologies and systems design enables occupants, shareholders to electronically book space over the Internet or on-site.

To reduce the need to carry diary/personal organiser, keys, mobile telephone, watch, wallet and.a mobile video Internet communicator may now be enabled by the technologies developed. By integrating long-life batteries, telephone, personal organiser and a proximity device/smart card in sequence with or the projects finger scan identification systems will or may enhance electronic financial transactions within the systems business network.

The personal communicator may enable monitoring and control of all module functions and communications with the modules on-line services.

Localised on-line business and hotel services may be available to each module. The exchange/entry lobby of each modular space may provide for convenience interchange with reduced packaging and may enable remote control and video communications with the modules including remote access to on-line goods and services.

Building operation control systems may be unified through the Internet. General monitoring of each module, on-line goods and services, energies, access control and on-site hotel/office vending and communications will also be provided.

Occupants book space over the Net, they can order on-line goods and services to be available on arrival and gain access on site via automated electronic vending.

Access to all building areas will be controlled by a security systems, preferably by a smart card and monitoring system. In order to encourage circulation between buildings, module licence holders will be permitted access to the visitor car-parks located at each of the groups separately located buildings. The smart card may also be programmed so that the services relevant for the use of the module are thereby activated.

The tilt slab wall sections dividing the modules main living/office area may provide an infill block-work, with a removable section, enabling linkage of two modules together. This could create a luxurious two/four bedroom version with double living area or one larger office environment.

### 13 Commercial development

Building information, communications, control and service systems may be linked to the management office. The buildings and preferably automated; features should include energy management, access control, lighting and process control systems amongst others. The system's flexibility ideally suits the requirements of the "city within the city" concept and can be scaled from a single site, single door access control system, all the way to a multi-site, multi-tenant system controlling thousands of access points in numerous buildings. This allows progressive development of these systems as the development grows.

The cost of construction should be much the same as for traditional residential unit construction. Due to cost savings associated with mass production of components, the presence of sub-floor service voids, and deletion of floor, ceiling and external surface finishes, the buildings will be easy and economical to build. Economies of scale will enable the base technology and systems to be extended and upgraded.

### 14 Practical examples

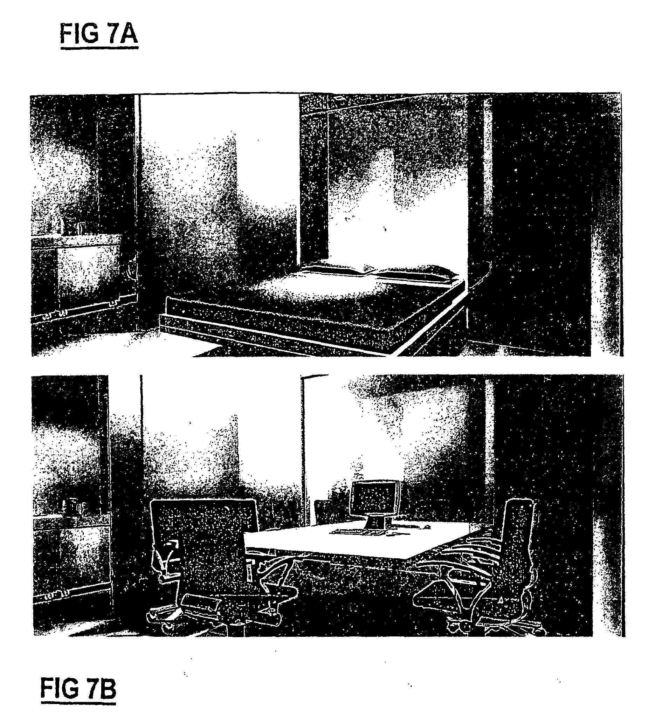

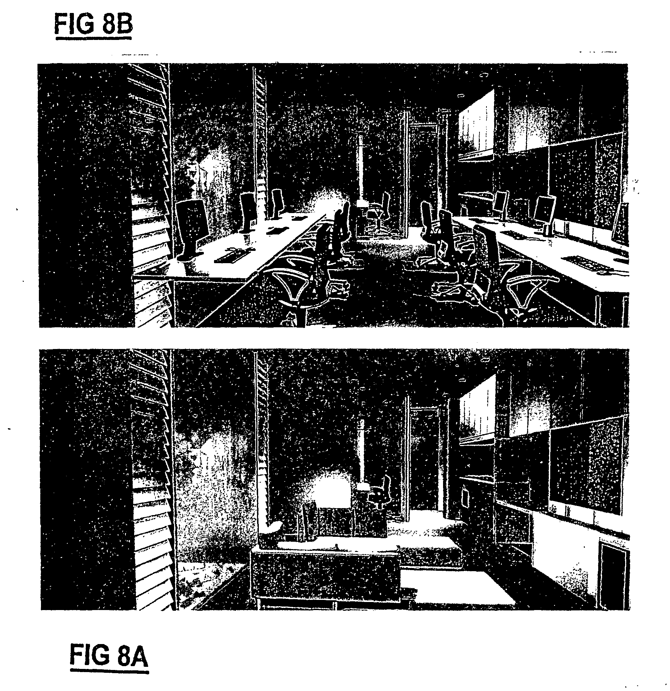

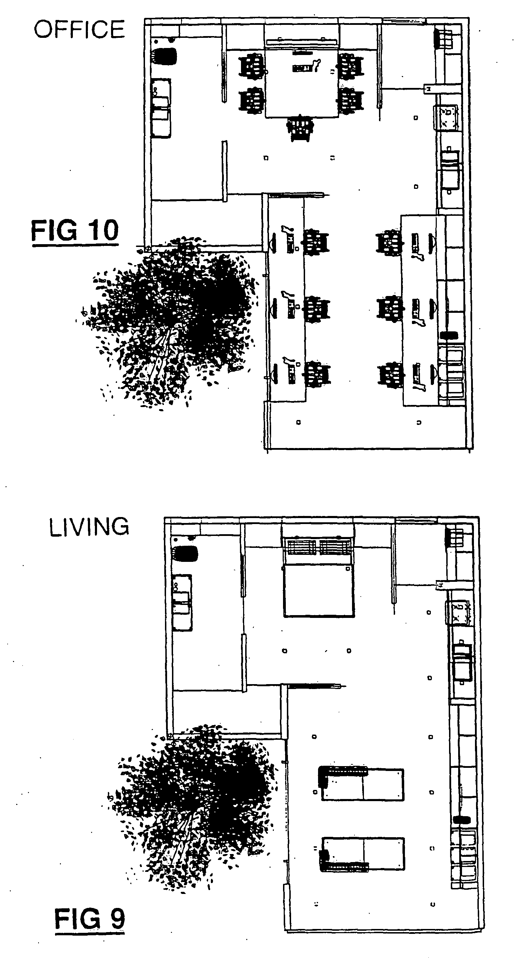

In Figs. 7 to 10 there is shown in illustrated how one module may be set-up and converted from one format to another, as well as how it can be erected. One set of drawings show the module's internal space configured for office use, with the other set show the same space configured for residential living quarters.

Fig. 7B shows a room available for the use of general space such as, for example, an office, a conference room, or the like whereas in Fig. 7A it is shown when being used as a bedroom. The bed is intended to fold down from the wall which can be seen by comparing the two drawings.

There is shown a basic floor plan of an example of one module. As one follows the successive drawings through one can see how the module is erected using pre-assembled components to create an apartment having a living area, bedroom, kitchenette and bathroom.

These modules would be of great advantage where facilities are required for a relatively short term. For example, during an Olympic Games a media centre is required, as is accommodation for all media representatives. That is required for a relatively short time. With this particular form the modules can be erected on site. By having each module intact it is only necessary to inter-connect the water reticulation, sewerage, power supplies, telecommunications links, and so forth, for all modules for these to then be linked to central systems. The modules can then be inhabited.

Like the modules described earlier, each module is relatively flexible and can be used as an office, accommodation, or a mixture of the two. Furthermore, with each module the side wall is adapted to be able to be hingedly connected to the remainder of the module at its top and hingedly connected to the floor at the base of the side. In this way one can raise a side, or lower it, to create a floor or roof as the case may be. If two spaced-apart modules do the same thing, extra space is created between them which is useable as general, open space. This may be able to be used as extra living space, office space, a balcony, or the like, as desired.

By having each module able to "lock in" to modules adjacent to it, above it, and below it, one can erect a structure of such modules in a relatively quick time. Similarly, it is possible to dismantle them relatively quickly so that they are useable for relatively short term occasions such as those described above.

For the open spaces created by the raising and lowering of walls, the front and rear may be able to be fitted with standard pre-made window units, balcony units, wall units, or the like.

All wiring is integrated into each module and by merely connecting the wiring to a common loom appropriate electrical connections and telecommunications connections can be made. By using snap-fittings for water reticulation and sewerage again ease of assembly and disassembly is provided. Likewise snap-fittings or other similar engagements can be used for air circulation and air conditioning.

It is therefore possible to create a building such as a media centre for short-term use for example, such as for Olympic Games in which accommodation is provided for the varying media representatives, offices created for their work to be able to be performed, makeup rooms created for those on television and film media, and even studios created to enable their broadcast to be made. In this way, for example, if the media centre was a sufficient size all of the accommodation, offices, makeup rooms, and studios for a particular television network, for example, could be on one floor or in one area.

### 15 Systems architecture

The system involves the creation and assembly of the latest technologies in a seamless fashion and provides improved interactive function between the occupant and the physical built form.

Systems designs may incorporate customer relationship management systems, membership system and loyalty marketing. Automated and remotely vendored stock and yield management systems may be incorporated to maximise occupancy of stocks and yield through interactive means. The system design enables automatic and remote vending and monitoring of building stocks to maximise occupancy based upon market demand, taking into account factors such as historical performance and demand patterns and enable automated trade of stock over the intemet.

Automated personal relationship systems may interact with all individuals and authorise building access through the creation of personal domains within the remotely hosted building group's centralised computer management facility. Systems interface enables automated identification and verification procedures to enable more efficient interactions and flows of individuals through the physical form. The centralised management computer may enable more automated and efficient management of building stocks via the Internet and more automated customer relationship management.

The linking of building automation and on-line systems integrated financial and automated security access provides an efficient and effective solution for the exchange of on-line goods and services to the module/unit.

More sophisticated design considerations may be given to wiring systems within buildings. Detailed design engineering of mass-produced high performance wiring looms may enable seamless transfer of data and incorporate advantages such as clean power circuits etc. The adoption of standardised wiring looms with assist in the seamless integration of all appliances within the space. The loom may be designed for extreme flexibility and may incorporate automated configuration enabling easy adaption of systems function and accessories, facilitating flexible network configurations.

The systems architecture consists of software and hardware arranged to enable the creation of automated building access control systems etc to enhance the functional operation of building spaces. Through the creation of personal domains within the building groups automated systems Internet based intelligent domains and portals may link individuals and organisations that are authorised to operate within building spaces.

### Security features

Building security access points may be automated and contained at a remote kiosk enabling on-site check-in identification and verification. Different checking procedures may apply to different customer profiles however may be designed to allow easy interaction for both casual and regular occupants.

By allocating security access to individual domains, occupants can access individual or modular units for example by using biometric finger scan verification at each control point.

By reference to the remotely hosted building groups automated access can be authorised and/or assigned by module occupants to their guests whilst in residence or from a remote interface. Module/unit physical access verification procedures may provide login and access to the building space integrating primary verification for logon and secure access to the individual's domain. This login procedure may then enable activation of the building space and its technological systems. The individual home networks may be managed by an in-house computer (server) networked to all appliances, control points and sensors. The addition of integrated speakers, in-wall video screen, video camera and microphones may enable real time audio-visual communication and provide a more user friendly interface between the occupant and the buildings systems.

A further link may be included by way of a mobile personal digital device, which may link the individual via its building module or unit via its in-house server to information and communication networks. Development of current technologies may enable integration of audio-visual function via the remote digital communication device providing direct links to the individual's module and it's associated features and services.

With integration of remote personal identification and verification procedures within the mobile device, secure and remote automated electronic financial transactions may be enabled. In effect the individual may not need to carry keys, wallet, diary or mobile phone. Remote audio-visual communications may enable remote monitoring and access together with all other network functions of the building space.

In-house computers may automatically interact with each individual building services computer and the building groups remotely hosted building management systems via the Internet. The in-house computer may provide automated control and function, and may interact with the buildings automated control and energy management systems. Interactions may enable interactive performance with the building's energy management system providing more efficient interactions for the sourcing and application of energies based upon precise demand.

The building processing computer may be able to more effectively balance power generation potential of the groups buildings and re-applying energies through the power grid in order to better match varying supply and demand levels of various buildings in various geographical locations.

The system may automatically link existing businesses through customer loyalty relationship networks. The system may integrate with existing marketing and trading networks to maximise return on stocks held. The system may automatically adjust pricing structures and booking ratios based on historical data and/or any extraordinary events that may be placed in the systems diary. The software may be able to predict market trends based upon performance data and emerging customer trends.

Via relationship with the building group's management computer the creation of individual domains may interact with authorised access to building systems and their physical spaces. Individuals may open personal data storage in the domain and save personal data and personal module/unit settings and enable automated direct billing of individual's expenditure.

Incorporation of recent Internet technologies (ie: topset decoders) within the systems design may enable real-time download of digital audio-visual files and provide the occupant with real-time audio-visual communications with the ability to send and receive video voicemail via individual domains. Systems design may enable fast transfer of audio-visual data enabling direct links to information and entertainment networks. With Internet development still in stages of infancy, development of high speed systems architecture may enable occupants, for example to search the world wide web with respect to any possible topic and potentially find audio-visual data that may have been published by private publishers anywhere in the world. The occupant may download and pay for licensed access to such data, watch the data real-time, then the occupant may choose to either delete the data file from the in-house computer or save it within their personal data storage facility. All personal files (business, personal communications and/or entertainment) may be easily stored in digital form for future reference. The exchange and retrieval of information may be made easier.

By adoption of the individual's domain and databases, the ability of the individual to move between available physical stocks (modules/units) within the groups holding may be enhanced. Upon entry, immediate personalisation may be easily imported onto the module/units network. Individual domains also may incorporate dynamic IP addressing that will follow the individual occupant to any geographic location in the world. This concept may enable more productive use of physical space and reduce the individual's dependence on geographic location.

Upgrades to the remote data storage facility may enable greater customer information management functions. For example, the ability for an individual to have authorised access to other individual's secure domains (ie: family, friends, contractors, employees or employers). Individuals may permit access to restricted files within their domains, others may access these files remotely and improve the productive flow of information.

Other functions may enable individual's information and/or files to be automatically sent to authorised individuals to enable immediate monitoring of the data. This data may for example enable automated remote monitoring of occupants for mental wellbeing through individual interactions, healthcare and remote diagnostics of equipment. Monitoring of company performance and/or individual progress via remote access may be available anywhere in the world; accordingly the systems design may reduce geographic dependence, and better assist international business activities.

The systems architecture may enable improved standards of living by enabling more productive use of time spent in various geographic environments and settings. The systems design challenges existing concepts through the blurring of boundaries between living, working, and recreation environments. Positive social benefits may be attained through the integration between education and recreation activities.

The systems architecture creates a relationship between the individual, the Management Company, building stock and it's associated services.

Like a membership system individual occupants or service providers may be authorised to access a building or buildings of the Management Company are allocated a personal domain with the Management Company's database. The individual via remote on-site identification and reference to their domain may access areas as and when authorised by use of remote membership recognition procedures may be utilised, for example: biometric finger scan or smartcard or other type of access verification and control system.

The systems architecture may enable individuals to be granted automated remote access to a building. The automated processes reference the individual request for access to the individual's domain. Via interactive processes, the management systems computer will assess the request against stock management files of the system and respond accordingly.

The member by requesting access at a building location will be identified through the link between the building management computer and the Management Company's computer. A building may consist of a series or of control points at creating various domains and levels of security within a building. The primary control point being street access to common areas within the building. The primary control point of request will be identified by the Management Company's computer, which checks the request against stock management files. Upon determination of the request is authorized the management company may accept or decline the request for access. All authorized entries would be lodged upon acceptance within the stock control file.

A secondary control point may then allow access to a further domain, either private or public located off the primary common area. A secondary common area may be a carpark, fire stair or alike. Further common areas may provide access to servicing areas etc.

Each time an individual moves through a building, the stock control files of Management Company can keep a log of all access transactions for each use class. The stock control file may operate in an interactive function with other sets of logic. For example:

With a particular use class individuals may have certain sets of performance. Forming the contractual relationship with the Management Company.

For example, an individual occupant of the domain may access online ordering from building services domain. By selecting, sending and ordering, the service domain of the company would identify the member and their location. At the same time the order is placed, stock control files would provide the required access to enable delivery to the individual occupants' location within the company's stock.

Security procedures to enable financial transactions to pass through an individual Internet domain are wide and varied. However with secure use of the domain of the financial control of an individuals' expense can be automated.

Accordingly upon an individual authorizing payment and placing an order through the management company's services portal, the order may then be placed with the serving provider and payment may be remitted immediately or upon agreed payment terms. For example, after completion or after a warranty period etc.

Automated remittance of funds might be conducted electronically to the service provider's bank account.

This could be achieved by setting up service agreement files setting out agreed operational guidelines or performance criteria and may enable automated monitoring of the standards regarding delivery of services to building stocks etc.

If the service provider had not delivered, for example a customer's request for a meal, each party may be contacted, by automated electronic means or by the company's customer liaison representative who may correspond electronically or by audio or by visual communication.

The links between the Management Company and the individual provide the ability for an individual to create a file within their domain, which provides a profile of the individual's personal requirements or settings for the physical space.

The Management Company effectively acts as a service provider providing formatted data storage with interactive knowledge management interface. Upon entering a space and after security identification and verification procedures, the occupant would have access to the space. The same process may prompt the in-house computer to be connected to the individual's domain.

Once the occupant moves through the common area of a building and undertakes secondary identification procedures, the building's management computer will activate the supply of services to the building space and will direct transfer of data back and forth between the individual's domain and the building spaces computer network.

The automation systems of the module would immediately receive the occupant's profile template setting of individual requirements for automated operation of all appliances and lighting systems, and enable the space to automatically adjust itself during the course of the day. Override to the systems might simply be activated through systems interface within the space.

Likewise, when a member needs to contact the management computer, they can simply access their domain from any location via the Internet. Automated booking and accounting procedures will enable the member to check on the availability of stock within the systems automated stock and yield management systems.

The person can authorise payment or booking fee and confirm the reservation. From the individual's personal profile data, the reservations system will know what type of space the occupant may be seeking in a particular location on a specific date. This will enable more interactive processes to occur as individuals move freely through the system.

Effectively, the system may enable the company to provide 'just-in-time' delivery personal variations, styles and/or component modifications to vary a space's function and form prior to arrival. The solution provides better customer service and may also enable more productive use of the building spaces over time.

For example: when a particular class of customer contacts the system, they will be automatically presented information on stock within that class. Upon confirming the booking, by reference to the individual's personal profile, sub contractors or company staff will activate the required changes or modifications and the automated processes will monitor the execution of the tasks in accordance with general guidelines.

Concierge/company staff and service providers may keep systems updated in respect to completion of specified tasks and provide status reporting on-site.

For example: after a room has been occupied, automated checkout procedures may incorporate the holding of a deposit against the individual's payment process.

The computers automated function will allocate cleaning to house staff. The computer will authorise and monitor entry into the space, and in the same manor as for an individual occupant, prompt automated connection to the individual cleaner's domain within the service provider's classification. By doing so, the cleaner may confirm that the occupant has left the room in a satisfactory condition.

The management system can then release the individual's deposit and place the room on the available stock management system.

### 16 Investment

A company may be established, via prospectus under the Managed Investments Act, and units sold in order to provide the funding required for the progressive development of new modular building sites.

The system allows unit-holders security and flexibility so that they can consider their investment in the manner of shares or units held. This enables unit-holders to share in the pooled income of, for example, a hotel, serviced offices, and commercial components of the company's assets, or to take possession of any available module (anywhere within the group's buildings), under licence from the company in exchange for the income on the required number of units.

This option to forego income on shares for the right to occupy also entitles the unit holder to the right to a conditional mortgage on the module's individual title. The condition on the mortgage would require that the banks recover moneys only through the sale of shares in the company. However, the benefit to the banks is that they could sell the units in one batch, into the residential or office sectors, or sell the units in the company in any quantity based upon their income stream and market value.

In an effort to improve liquidity and tradeability of units in the company, and to maximise return on investment whilst minimising the downside risk of fluctuations in the value of different market sectors, the company mentioned previously, would be established via prospectus under the Managed Investments Act. The company will sell units in order to provide the equity required for the progressive development of new buildings to add to the existing network. Optional access to income pooling of numerous buildings in separate locations minimises the risk of economic changes to different geographic areas over time.

The ownership system is ideal as it allows unit holders to be in control of and share in the pooled income of the commercial assets of the company. These will be managed by the company's board of management which will allow unit holders the option to vote via e-mail and communicate with the company on a regular basis. People with suitable skills from within the company will be encouraged to set up appropriate businesses within the company's commercial areas; in any event a professional and contemporary tenancy mix will be established. Options ove hotel and office space may be sold over the Internet. Therefore, the modules are more tradeable and acceptable to the financial markets.

The co-operative development trust provides a coordinating and protective net over the socio-economic activities and physical management of the company's assets and the inter-connected businesses. Under a franchise relationship with these businesses, the Management Trust Company may provide assistance in the design, production, wholesale/group purchasing, relationship marketing and distribution of the on-line goods and services. Flowing from this assistance, the economic levels of quality, service and cost may be passed back to consumers of these services. The Management Trust Company may also provide personal development, business development and business enabling programs to its franchisees and financial and property management services over the assets of the company.

A franchised management may be used, if desired, with the management organisation having control and/or input to all business in the system.

In order to maintain the integrity of the product and the sites the company will be required to purchase all new sites and construct new buildings.

A further "direct and sustaining link" will then become possible by linking business performance with the company via turnover based rental. This creates a direct link between all businesses in the company, investors in the company, consumers and the community as a whole. It is proposed that when the company is of reasonable size and with the assistance of the technology available, regular reporting of previous performance and other statistics in respect of the company would establish information such as the average daily rate paid by the company as a return on investment.

The hotel business would be designed to be highly efficient, and initially link with travel organisations that have existing global retail networks in order to sell room space and attract an international influence through the buildings. Each module may have hotel touch screen vending machines that allow a guest to electronically pay for a room. The computer would hold a deposit via credit card for a twenty-four hour period, which would be released when house cleaners had re-entered the room as being vacant. Not only will the buildings be rendered "intelligent" by design-based solutions, but any occupant or visitor, or business or social network establishing contact (via tourism, visitors, internet and so on) will be energised and strengthened by association with them.

As the company grows in size, new businesses will be established as the building services range may increase with economies of scale. It is envisaged that the main buildings will incorporate another business similar to the hotel operation. A serviced office operation may be provided utilising the modules but also having its own presentation facilities, such as meeting/presentation rooms, or internet cinema etc.

Different business services may be made available to all modules in the company and all other general hotel services may be available to business guests through the menu on each of the module's user-friendly interface system, including services from dry cleaning, to meal deliveries from associated restaurants.

### Property development

A property development financial and legal model has been developed and may create a solution such that property developers may develop buildings on ideas, requiring reduced financial capacity and/or pre-sales.

The legal and financial architecture may even enable an individual to develop an idea into physical reality without having money or taking a development risk. The variable template design may enable people with good ideas but no financial capacity to take part in the development and profit from a project with substantial financial value.

Linking in series contractual and financial arrangements may enable the development finance model. For example, the seamless series of contracts may enable a developer to receive 15% profit with the investment of no money and based upon a project profit of only 30%.

It also enables a developer with as little as $200,000 to receive a 90% return on investment. The systems design also minimises risk by contracting risks away from an investor or developer. The model also does not require the pre-sale of stock into the market in order to commence production.

The model consists of five elements:
- An owner of existing stock or investor
- A builder or manufacturer
- A developer with a feasible project
- A bank or lender
- An insurance underwriter

The arrangement of contracts in this particular series enables a three stage back-to-back process. The owner of existing stock or land provides a licence to the builder or manufacturer to take possession of the physical stock or land for the purpose of completing the proposed development.

For the contribution by the owner of the land or stock, the developer enters into an agreement to develop the stock or land. The title to ownership of the stock or land will remain with the owner until completion of the manufacturing or construction contract.

The owner agrees to take stock and or a profit margin in completed product upon completion of manufacturing or construction.

Title passes upon completion (marked in blue) of the first stage of the process and is immediately replaced with title to ownership of the new stock.

The builder/manufacturer also participates in the process and agrees that upon guaranteed payment for construction that they may take stock in exchange for their margin on the building/manufacturing contract.

The builder/manufacturer enters into a tumkey contract and agrees to build or manufacture the product with payment upon completion in accordance with agreed specifications. The builder/manufacturer's contract will limit commercial construction risks entirely for the builder/manufacturer until settlement. The contract would be a fixed price, payment on completion contract. In the case of property development, as a precedent condition of the construction contract, titles or shares to the respective completed stocks must be issued by the respective authorities and available for distribution at settlement.

The banks risk is minimised by the process in that simultaneously the bank/lender pays the builder (in the case of diagram 7.6), 50% of the project value, and immediately receives 10% back from the builder upon allocation of the completed stock. Through the use of back-to-back contracts, signed at the commencement of the project, an underwritten insurance sale guarantee is provided to the bank in exchange for payment of the premium.

In the case of example 7.1, the bank/lender immediately receives a 40% sale guarantee and automatically their risk on funds lent is reduced to developer borrowings of only 10% of project value and on a gearing ratio of only 41 %.

The bank/lenders agree to lend money upon completion of the project when they are able to take a mortgage or other form of security over title to the property or stock. By linking timing of transactions, the risk profile of the bank or lender is minimised. Accordingly, there is no equity or market pre-sales required.

The bank/lender, at the commencement of the transaction, provides the builder/manufacturer with a bank guarantee, guaranteeing financial settlement of the building or manufacturing contract.

The systems architecture enables the forward contracting of risk by participants, through the pre-agreed placement of stock. Contracts to purchase or to guarantee sales are based upon pre-determined conditions, and meet back to back with the requirements of each of the parties.

In the case of example 7.6, the underwriter or insurer receives a fee of 15% of the guarantee sum. The guarantee provides that if 40% of the available 65.5% of the available stock is not sold and settled for the agreed value, within six months after completion, then the insurer shall be responsible to the bank for the required performance pursuant to the agreed terms of the mortgage.

### Co-operative development trust

The systems design involves the establishment of a trust structure with a clearly defined vision and operational memorandum.

The Company or Trust may choose to have its management elected by its members or by other means to ensure integrity and effective management.

The Company or Trust will promote the businesses, skills, ideas and wellbeing of its community. The Company, under licence of participants, may provide and establish integrated services to a group or groups of businesses within the community or disparate geographic locations of the world.

The range of services the Trust group could facilitate is wide and varied, and may provide intellectual management and co-ordination of the combined activities of the individuals. The activities of the trust might aim at providing benefits to its members by communicating closely with them.

Effective management of resources and solid economic communities have been developed and more effectively linking of ideas, skills and resources within and between communities providing more effective development and solid economic growth. The matrix and paradigms, which occur in life, might be enhanced such that opportunities appear more often. Through systems design it may be possible to create more sophisticated legal and financial systems that may enable participants to better their lives.

The inventive concept involves the creation of a contemporary format co-operative Trust. The trust may be developed in conjunction with infrastructure/property owners and potentially provide integrated property management services and creating more sustainable solid economic outcomes. Another manifestation of the system may be incorporation of a Property Investment Trust providing common ownership and overlap between participants of the Development Trust and the wider community.

Systems design, incorporating legal and accounting solutions have been developed and may provide overall consideration for more effective socio-economic sustainability, one that values the human resource base and wellbeing of its people. Fees earned by the Trust would generally be applied towards furthering the service that it provides to its members and provide absolute value in all areas of its activities. By resolution passed by the Trustee Company, money may be distributed in a discretionary fashion.

A series of design templates have been developed and which may provide more effective implementation for the ongoing solid economic development of building occupants and their communities.

The Trust would provide services to its members, which may incorporate networked access to the trust's computerised management systems. The Trust may co-ordinate wholesale purchasing of goods and services, energies, communications and design development of its members businesses or their ideas and skills, and may then pass economic and/or quality benefits gained back to its members.

The Trust may improve, assist, and/or enable the production within its members businesses. The Trust may assist with establishment of alliances, broker funding, provide 'Just-in-time' distribution, and networking between members, etc.

The Trust may provide professional management in respect to effective public relations and marketing activities of its members, co-ordinate events and promotions on behalf of the group, and promote the general interests of its members. The Trust may act as a type of 'Chamber of Commerce' representing the interests of the group and promoting the respective interests of its members.

The Trust may also assist with the sourcing and distribution of goods and services within the group or co-ordinating distribution for its members.

## Claims

1. A modular building unit adapted to be used with one or more similar units to form a building structure, wherein the building unit includes one or more fittings for attachment and detachment of functional components which allow the structure or part of the structure to be converted between at least two usage modes.

2. A modular building unit as claimed in claim 1, wherein said fittings are of standardised size and configuration.

3. A modular building unit as claimed in claim 1, wherein said fittings are snap engageable and disengageable with said components.

4. A modular building unit as claimed in claim 1, wherein said components include furniture components.

5. A modular building unit as claimed in claim 1, wherein at least part of the structure can be converted between at least two of said plurality of usage modes by movement and/or replacement of some or all of the furniture.

6. A modular building unit as claimed in claim 1, wherein said plurality of usage modes include one or more of: office mode, residential mode, hotel mode, recreational mode.

7. A modular building unit as claimed in claim 1, wherein the unit has standard dimensions and is suitable for storage and transport in a standard shipping container.

8. A modular building structure being formed from a plurality of building units, wherein the building units are secured together in a checkerboard configuration so that the effective volume of the building structure is greater than the aggregate volume of the individual component building units.

9. A modular building structure being formed from a plurality of building units, wherein at least some of the units are mutually positioned so as to define one or more enclosed volumes in which the external sides of the building units act as sides of the enclosed volume.

10. A modular building unit suitable for forming a building structure, the unit being adapted to be used with one or more similar units to form a building structure, wherein the upper external surface of the unit is adapted to be used as a floor, and/or the lower external surface of the unit is adapted to be used as a ceiling, and/or one or more of the side walls is movable or removable.

11. A modular building unit as claimed in any one of claims 8, 9 or 10, wherein one or more of the floors and/or ceilings of each building unit can be removed to provide an internal space of increased vertical extent.

12. An exchange module for a building structure to permit the secure exchange of items to or from the building structure, the exchange module including:
a physical space to which access is restricted; and
an authorisation means able to permit access to said restricted space in response to supply of authorisation information;
wherein said authorisation means authorises access to said restricted space in response to said supply of said authorisation information when said authorisation information is provided in respect of an authorised access instruction.

13. A louvre assembly for use with the façade of a building structure, the louvre assembly including:
a series of louvres; and
a horizontally-oriented member connected at an upper edge of said
series of louvres;
wherein, in use, the louvre assembly can be translated through a range of locations including locations in which the horizontally-oriented member which can act as a handrail for the facade.

14. An energy management system for a building structure, the system including:
a plurality of energy sources, each of a designated type;
means for determining a plurality of energy demands within a building structure, each of said energy demands being of a designated type;
means for supplying each of said energy demands from one or more of said energy sources;
wherein at least one of said energy demands can be met by said supply means with energy preferentially supplied by at least one of said energy sources rather than another of said at least one of said energy sources.

15. A water management system for a building structure, the system including:
a plurality of water sources of respective different water quality levels suitable for respective usage qualities;
means to treat water of at least one of said plurality of different water quality levels to provide water of an improved water quality level;
wherein water usage demands in the building structure are one of a number of different usage types requiring water of at least a designated water quality level, and
wherein the amount of water drawn from the water source of the highest water quality level can be reduced by using, for each designated usage type, water generally meeting rather than exceeding said designated water quality level for that respective usage type.

16. A resource management system for a building structure, the system including:
metering means for metering the consumption of one or more resources:
observation means to estimate likely usage patterns of resources in the building structure and/or environmental conditions;
control means for controlling the usage of said one or more resources; and
management computing means for accepting inputs from the metering means and observation means to allow a user to control the user of said resources using the control means.

17. A method of configuring a building structure, the method including:
providing one or more building structures having one or more configuration options;
storing one or more preference profiles, each profile recording various desired building options in relation to the building structure;
configuring the configuration options of the building structure to be compatible with the environmental options of the preference profile.

18. A method of investment involving building structures, the method including:
providing one or more buildings;
providing a pool of income associated with the operation of said one or more buildings; and
recognising rights associated with said one or more buildings as being owned by a plurality of investors;
wherein said rights may be exercised by one or more of said investors by:
(a) providing a right of occupancy of said one or more buildings or part of said one or more buildings; or
(b) providing a right of access to income associated with the operation of said one or more buildings.

19. A method of investment involving buildings, the method including:
providing one or more buildings;
administering the rights associated with said one or more buildings through a central entity; and
recognising said rights as being owned by a plurality of investors;
wherein said rights may be exercised by one or more of said investors by:
(a) providing a right of occupancy of said one or more buildings or part of said one or more buildings; or
(b) providing a right of access to income associated with the operation of said one or more buildings.
